(19) **Europäisches Patentamt**
**European Patent Office**
**Office européen des brevets**

(11) **EP 1 713 345 B1**

(12) **EUROPEAN PATENT SPECIFICATION**

(45) Date of publication and mention
of the grant of the patent:
**10.05.2017 Bulletin 2017/19**

(51) Int Cl.:
***A23C 19/032*** (2006.01)

(21) Application number: **05702525.6**

(22) Date of filing: **03.02.2005**

(86) International application number:
**PCT/IB2005/000427**

(87) International publication number:
**WO 2005/074694 (18.08.2005 Gazette 2005/33)**

(54) **CHEESE PRODUCTS**

KÄSEPRODUKTE

PRODUITS FROMAGERS

(84) Designated Contracting States:
**AT BE BG CH CY CZ DE DK EE ES FI FR GB GR
HU IE IS IT LI LT LU MC NL PL PT RO SE SI SK TR**

(30) Priority: **04.02.2004 GB 0402474**
**12.02.2004 GB 0403169**
**17.02.2004 US 544331 P**

(43) Date of publication of application:
**25.10.2006 Bulletin 2006/43**

(73) Proprietor: **DuPont Nutrition Biosciences ApS**
**1411 Copenhagen K (DK)**

(72) Inventors:
 • **SCHLOTHAUER, Ralf-Christian**
  **Te Aroha (NZ)**
 • **RADEMACHER, Inez**
  **24963 Tarp (DE)**
 • **PETERSEN, Hans-Uwe**
  **24855 Bollingstedt (DE)**
 • **FAERGEMAND, Merete**
  **DK-3450 Allerod (DK)**
 • **HINRICHS, Jorg**
  **70599 Stuttgart (DE)**
 • **LILLEVANG, Soren, Kristian**
  **DK-8310 Tranbjerg J (DK)**

(74) Representative: **DuPont EMEA**
**Langebrogade 1**
**1411 Copenhagen K (DK)**

(56) References cited:
**WO-A-99/18807**

 • **PETERSEN B L ET AL: "INFLUENCE OF
  CAPSULAR AND ROPY
  EXOPOLYSACCHARIDE-PRODUCING
  STREPTOCOCCUS THERMOPHILUS ON
  MOZZARELLA CHEESE AND CHEESE WHEY"
  JOURNAL OF DAIRY SCIENCE, AMERICAN
  DAIRY SCIENCE ASSOCIATION. CHAMPAIGN,
  ILLINOIS, US, vol. 83, no. 9, September 2000
  (2000-09), pages 1952-1956, XP000967627 ISSN:
  0022-0302 cited in the application**
 • **LOW D ET AL: "ROLE OF STREPTOCOCCUS
  THERMOPHILUS MR-1C CAPSULAR
  EXOPOLYSACCHARIDEIN CHEESE MOISTURE
  RETENTION" APPLIED AND ENVIRONMENTAL
  MICROBIOLOGY, WASHINGTON,DC, US, vol. 64,
  no. 6, June 1998 (1998-06), pages 2147-2151,
  XP000925639 ISSN: 0099-2240**
 • **PERRY D B ET AL: "EFFECT OF
  EXOPOLYSACCHARIDE-PRODUCING
  CULTURES ON MOISTURE RETENTION IN LOW
  FAT MOZZALELLA CHEES" JOURNAL OF DAIRY
  SCIENCE, AMERICAN DAIRY SCIENCE
  ASSOCIATION. CHAMPAIGN, ILLINOIS, US, vol.
  80, no. 5, May 1997 (1997-05), pages 799-805,
  XP000657588 ISSN: 0022-0302**
 • **PERRY D: "Manufacture of low fat mozzarella
  cheese using exopolysaccharide-producing
  starter cultures" JOURNAL OF DAIRY SCIENCE,
  AMERICAN DAIRY SCIENCE ASSOCIATION.
  CHAMPAIGN, ILLINOIS, US, vol. 81, no. 2, 1998,
  pages 563-566, XP000740336 ISSN: 0022-0302**
 • **HASSAN A. N. ET AL.: "Observation of bacterial
  exopolysaccharide in dairy products using
  cryo-scanning electron microscopy"
  INTERNATIONAL DAIRY JOURNAL, vol. 13, no.
  9, 2003, pages 755-762, XP008046090**

**(Cont. next page)**

- **BROADBENT JEFFERY R. ET AL.: "Use of exopolysaccharide-producing cultures to improve the functionality of low fat cheese" INTERNATIONAL DAIRY JOURNAL, vol. 11, no. 4-7, 2001, pages 433-439, XP002325765 cited in the application**
- **LOW D ET AL: "ZUR BEDEUTUNG VON STREPTOCOCCUS THERMOPHILUS MR-1C-KAPSELECO- POLYSACCHARID AUF DIE WASSERRETENTION IN KAESE. (ROLE OF STREPTOCOCCUS THERMOPHILUS MR-1C CAPSULAR EXOPOLYSACCHARIDE IN CHEESE MOISTURE RETENTION)" MILCHWISSENSCHAFT, VV GMBH VOLKSWIRTSCHAFTLICHER VERLAG. MUNCHEN, DE, vol. 54, no. 2, 1999, page 111, XP000825777 ISSN: 0026-3788**

## Description

### Field of invention

The present invention relates to a composition suitable for forming a cheese product. The present invention also relates to use of the composition for preparing cheese product and to methods for making same.

### Introduction

A number of useful microbial polysaccharides are currently used in different industries. Some of these include the food and the feed industry, agro-chemistry, crude-oil recovery, medicine and pharmacology, fine chemistry and cosmetics, separation technology and polymer chemistry.
Different micro-organisms (bacteria, fungi, yeast or algae) produce such polysaccharides. Bacterially produced polymers may be assembled as capsular polysaccharides (CPS) that are tightly associated with the cell surface, or they can be released into the growth medium (i.e. "ropy" polysaccharide).
Different food grade lactic acid bacteria (LAB) have been reported to produce exopolysaccharide (EPS) (Cerning, 1990, FEMS Microbiol. Rev. 87:113-472). LAB strains producing EPS have been used in the dairy industry in their capacity to improve the rheological properties of fermented milks and cheese.

There is a large diversity of EPS molecules produced by different food grade LAB that may differ in their composition, number of sub-units, electrical charge, presence of side chains and rigidity of the molecules. The EPS may be composed of different types of sugar monomers known as hetero-EPS or it may be comprised of one type of sugar monomer known as homo-EPS.

The term exopolysaccharides (EPS) may be used to describe either types of EPS (Sutherland, I. W., 1972, Adv. Micro. Physiol.8:143-212).

In the manufacture of cheese, EPS expressing starter acidification cultures have been reported to improve texture and stability by increasing the viscosity and elasticity of the final product and by binding hydration water and interacting with other milk constituents, such as proteins and micelles, to strengthen the rigidity of the casein network. As a consequence, EPS can decrease syneresis (serum separation), improve product stability and rheological properties (Moreira et al., 2003 Milchwissenschaft 58(5/6):301).

Broadbent *et al.,* report that encapcidated, but not ropy, EPS producing starter culture *Streptococcus thermophilus* can be used to increase moisture content and improve melt in Mozzarella cheese, without deleteriously affecting whey viscosity (Broadbent et al., 2001, Int. Dairy J.,11, 433-439).

Broadbent, *et al.*, reports that starter cultures producing hetero-EPS during the cheese making process can lead to greater moisture retention which results in an improved organoleptic properties, better mouth-feel, enhanced melting properties and increase in softness (Broadbent, J. R., et al., 2003. J. Dairy Sci. 86:407-423).

In addition, the supply of hetero-EPS with the starter culture has been associated with a reduction in the grittiness of the cheese on inclusion of whey protein during the cheese making process (Petersen, B. L. et al., 2000 J. Dairy Sci. 83:1952-1956).

Bhaskaracharya and Shah, 2000 have reported the production of mozzarella type cheeses with reduced-fat content having characteristics such as hardiness, cohesiveness, adhesiveness, springiness, chewiness and gumminess similar to their full-fat counterparts when using LAB starter cultures which produce EPS (Bhaskaracharya and Shah, 2000, The Australian J. of Dairy Technology, 55 (3): 132-138).

However, the ability of EPS to engage and retain water can also have adverse effect on the cheese product. For example, higher retention of water may result in faster microbial acidification that may adversely affect the flavour and ripening of the cheese. This can potentially lead to a more rapid loss of the desired flavour characteristics of the cheese product while at the same time shortening the shelf life. Consequently this may lead to commercial and financial losses.

In addition high moisture may adversely affect the pH decrease of the cheese product during cheese making. Such conditions may provide suitable environment for proliferation of pathogenic bacteria such as *E. coli* and *Listeria.*

It has been suggested that most of these problems stem from the fact that the amount of EPS produced during the cheese making process can not be sufficiently well controlled when EPS producing LAB are used in the acidification step of the cheese making process. Also the water retention has to be controlled to get an organoleptically acceptable product.

### Broad Aspects

In a broad aspect, the present invention relates to a composition suitable for forming cheese comprising a starter acidification culture and an exopolysaccharide (EPS) fermentation culture wherein said EPS fermentation culture contains a viable micro-organism, selected from the group consisting of *Streptococcus thermophilus* V3, *Lactococcus lactis ssp cremoris 332, Lactobacillus sakei* 570 deposited as DSM 15889 at the Deutsche Sammlung von Mikroorganismen und Zellkulturen GmbH, and *Leuconostoc mesenteroides* 808, wherein said lactic acid micro-organism is capable of producing an enzyme, and wherein said enzyme is capable of producing an EPS.

The present application also describes a composition wherein said EPS production occurs separately from acidification by said starter acidification culture.

The present application also describes the use of a composition according to the invention suitable for forming a cheese product so as to improve one or more of its texture, aroma, flavour, mildness, consistency, softness, body, mouth-feel, firmness, viscosity, gel fracture, melting, wheying off, syneresis, structure and/or organoleptic properties, less grittiness upon inclusion of whey protein, nutrition and/or health benefits.

Also described is a cheese product with higher level of residual moisture content after the dripping off period and the ripening stage.

To date no one has suggested a composition suitable for forming a cheese by a modified method where the method of cheese making using the starter culture is segregated from the process of producing the EPS which is added to the composition via the EPS fermentation culture.

Other aspects of the present invention are presented in the accompanying claims and in the following description. These aspects are presented under separate section headings. However, it is to be understood that the teachings under each section are not necessarily limited to the particular section heading.

## Specific Aspects

In one aspect, the present invention provides a composition suitable for forming cheese comprising a starter acidification culture and an exopolysaccharide (EPS) fermentation culture wherein said EPS fermentation culture contains a viable lactic acid micro-organism selected from the group consisting of *Streptococcus thermophilus* V3, *Lactococcus lactis ssp cremoris 332, Lactobacillus sakei* 570 deposited as DSM 15889 at the Deutsche Sammlung von Mikroorganismen und Zellkulturen GmbH, and *Leuconostoc mesenteroides* 808, wherein said lactic acid micro-organism is capable of producing an enzyme, and wherein said enzyme is capable of producing an EPS.

According to another aspect, the present invention provides a composition wherein said EPS production occurs separately from acidification by said starter acidification culture.

In another aspect the EPS fermentation culture is formed *in situ* by cultivating the lactic acid micro-organism with a suitable enzyme substrate. A suitable enzyme substrate can be any sugar molecule such as a mono-saccharide, di-, tri- or terta-saccharide. The preferred enzyme substrate is sucrose, and/or fructose, and/or glucose, and/or maltose, and/or lactose, and/or stacchyose and/or raffinose and/or verbascose.

In another aspect the present also describes the use of a composition of the invention to prepare a cheese product wherein the composition comprises a starter acidification culture and an EPS fermentation culture wherein said EPS fermentation culture contains a viable lactic acid micro-organism, wherein said lactic acid micro-organism is capable of producing an enzyme, and wherein said enzyme is capable of producing an EPS.

Also described is a cheese product prepared by using a composition comprising a starter acidification culture and an EPS fermentation culture wherein said EPS fermentation culture contains a viable lactic acid micro-organism, wherein said lactic acid micro-organism is capable of producing an enzyme, and wherein said enzyme is capable of producing an EPS.

Also described is a soft cheese product comprising the composition as described herein.

Also described is a cheese product comprising a starter acidification culture and an EPS fermentation culture consisting of a viable lactic acid micro-organism, an enzyme derived from said viable lactic acid micro-organism and an EPS produced by said enzyme, where the EPS is capable of modulating the moisture level of said cheese product.

Also described is a cheese product comprising a starter acidification culture and an EPS fermentation culture consisting of a viable lactic acid micro-organism, an enzyme derived from said viable lactic acid micro-organism capable of producing an EPS and an EPS produced by said enzyme, wherein said EPS fermentation culture is capable of improving at least one of texture, aroma, flavour, mildness, consistency, body, mouth feel, firmness, viscosity, gel fracture, wheying off, syneresis, structure and/or organoleptic properties, nutrition and/or health benefits of the cheese product containing said EPS as described herein.

Also described is a method for preparing a cheese product the method comprising admixing a composition as described herein with a medium suitable for forming cheese so as to form a cheese curd containing about 50% moisture level and wherein during ripening of the cheese product less than about 5% moisture is lost.

Also described is a cheese product comprising a starter acidification culture and an EPS fermentation culture consisting of a viable lactic acid micro-organism, an enzyme derived from said viable lactic acid micro-organism capable of producing an EPS and an EPS produced by said enzyme, wherein said lactic acid bacteria and EPS imparts nutritional and/or health benefits to the consumer.

In yet another aspect there is provided a process for *in situ* production of an EPS comprising the steps of providing a composition according to the invention comprising a starter acidification culture and an EPS fermentation culture wherein said EPS fermentation culture contains a viable lactic acid micro-organism, permitting growth of said viable lactic acid micro-organism so as to produce an EPS and optionally isolating said EPS.

In yet another aspect, the present invention provides a process for *in situ* production of homo-EPS by growing *Lactobacillus sakei* 570 and optionally isolating the EPS.

Also described is a cheese product comprising a starter culture and an EPS fermentation culture consisting of a viable lactic acid micro-organism, an enzyme derived from said viable lactic acid micro-organism capable of producing an EPS and an EPS produced by said enzyme, wherein the EPS is made up of homo-EPS and/or hetero-EPS.

## Preferable Aspects

In one preferred aspect, there is provided a composition suitable for forming cheese comprising a starter acidification culture and an exopolysaccharide (EPS) fermentation culture wherein said EPS fermentation culture contains a viable lactic acid micro-organism selected from the group consisting of *Streptococcus thermophilus* V3, *Lactococcus lactis ssp cremoris 332, Lactobacillus sakei* 570 deposited as DSM 15889 at the Deutsche Sammlung von Mikroorganismen und Zellkulturen GmbH, and *Leuconostoc mesenteroides* 808, wherein said lactic acid micro-organism has produced an enzyme, and wherein said enzyme has produced an EPS.

Preferably the starter acidification culture for use as described herein comprises a starter acidification micro-organism culture that is capable of fermenting lactic acid.

Preferably the starter acidification culture is a culture of a lactic acid bacterium.

Preferably the starter acidification lactic acid bacterium culture is selected from a group consisting of *Lactococcus, Streptococcus, Pediococcus, Enterococcus, Leuconostoc, Carnobacterium, Propionibacterium, Bifidobacterium* and *Lactobacillus* genuses.

Preferably, the EPS fermentation culture which contains a viable micro-organism culture for use as described herein is a culture of a viable lactic acid bacterium.

Preferably the viable lactic acid bacterium of the EPS fermentation culture is selected from a group consisting of *Lactococcus, Streptococcus, Pediococcus, Enterococcus, Leuconostoc, Carnobacterium, Propionibacterium, Bifidobacterium* and *Lactobacillus* genuses.

Also described is an *in situ* produced EPS using an EPS fermentation culture wherein said EPS is produced in the presence of a suitable enzyme substrate selected from the group consisting of sucrose, fructose, glucose, maltose, lactose, stacchyose, raffinose and verbascose.

In another described aspect, there is provided an EPS wherein the EPS is a hetero-EPS produced by the viable lactic acid bacterium *Streptococcus thermophilus* V3 of the EPS fermentation culture.

Also described is an EPS wherein the EPS is a hetero-EPS produced by the viable lactic acid bacterium *Lactococcus lactis* ssp. *cremoris* 322 of the EPS fermentation culture.

Also described is an EPS wherein the EPS is a homo-EPS produced by any one of the viable lactic acid bacteria which can be selected from the group consisting of *Lactobacillus sakei* ssp., *Lactobacillus plantarum ssp., Lactobacillus salivarium ssp and Leuconostoc mesenteroides ssp.*

In a preferred described aspect, the EPS fermentation culture comprises a viable micro-organism which belongs to the genus of *Lactobacillus.*

In a preferred aspect, the viable lactic acid bacterium for use in the present invention is *Lactobacillus sakei* 570.

In a preferred aspect, the viable lactic acid bacterium for use in the present invention is *Leuconostoc mesenteroides* 808.

In yet another preferred aspect the present invention relates to a use of a composition according to the present invention to prepare a cheese product wherein the composition comprises a starter acidification culture and an EPS fermentation culture wherein said EPS fermentation culture contains a viable lactic acid micro-organism selected from the group consisting of *Streptococcus thermophilus* V3, *Lactococcus lactis ssp cremoris 332, Lactobacillus sakei* 570 deposited as DSM 15889 at the Deutsche Sammlung von Mikroorganismen und Zellkulturen GmbH, and *Leuconostoc mesenteroides* 808, wherein said lactic acid micro-organism has produced an enzyme, and wherein said enzyme has produced an EPS.

Also described is a cheese product comprising a starter acidification culture and an EPS fermentation culture containing a viable lactic acid micro-organism, an enzyme produced by said viable lactic acid micro-organism and an exopolysaccharide (EPS) produced by said enzyme wherein the amount of EPS is capable of being modulated.

Also described is that the amount of EPS can be modulated by the number of viable lactic acid micro-organisms in the EPS fermentation culture the length of fermentation, the incubation temperature, the pH or the presence of the acceptor molecule maltose.

In another preferred aspect EPS is capable of modulating the moisture level of the cheese product by optimising whey release during curd processing.

In another aspect EPS is capable of increasing the stability and/or the elasticity of the curd.

In another preferred aspect the cheese curd exhibits greater resilience to physical manipulations which allow it to be manipulated with conventional cheese curd manipulating equipment.

In another described aspect the moisture level in the cheese is maintained during the ripening stage.

In another described aspect the target moisture in the cheese is capable of being reached after cheese curd processing.

In another described aspect the target moisture in the cheese is capable of being reached by retarding whey release during the cheese curd curing process.

In another aspect EPS is capable of forming a cheese curd containing about 50% moisture level.

In another preferred aspect the cheese product losses less than 5% moisture during the ripening stage.

In another described aspect the cheese product is characterised with an increased product yield.

In another aspect the cheese product is capable of modulating the microbial balance of the gastrointestinal tract after consumption of the cheese product.

Also described is the use of an EPS fermentation culture according to the invention consisting of a viable lactic acid micro-organism, an enzyme derived from said viable lactic acid micro-organism capable of producing an EPS and an EPS produced by said enzyme, wherein the EPS is capable of improving at least one of texture, aroma, flavour, mildness, consistency, body, mouth feel, firmness, viscosity, gel fracture, wheying off, syneresis, structure and/or organoleptic properties, nutrition and/or health benefits of the cheese product.

## Advantages

Some advantages of the present invention are presented in the following commentary.

A primary advantage of the present invention is the capacity of the EPS fermentation culture comprised in the composition of the invention to achieve an inclusion of EPS into the cheese - this will bind water and retard weight loss over the ripening period.

The potential disadvantages of high initial moisture retention will be overcome by the optimised curd processing and/or culture addition. Initially moisture is removed to obtain about 50% moisture content that is actually more difficult in the presence of EPS. Accordingly the cheese process has to be optimised in order for the cheese to have a suitable flavour and texture. Thus, after 50% moisture level is reached the presence of EPS becomes an advantage by retaining the residual moisture.

Another advantage of the present invention is the separation of the cheese making process from the production of the EPS thus allowing a better control of the amount and type of EPS in the cheese.

The capacity to modulate the amount and type of EPS produced during the cheese making process allows a better control of the moisture level in the cheese during the ripening stage.

A further advantage of the present invention is the capacity to overcome the problems associated with high moisture content at the beginning of the cheese process by achieving a suitable moisture level at moulding the cheese, achieving the right water losses over the dripping off period and prevent the losses over the ripening stages of the cheese making process.

A further advantage of the present invention is the capacity of the EPS fermentation culture comprised in the composition of the invention to modulate at least one of texture, aroma, flavour, mildness, consistency, body, mouth feel, firmness, viscosity, gel fracture, wheying off, structure and/or organoleptic properties, nutrition and/or health benefits of the cheese product.

Another advantage according to the present invention is the capacity of the EPS fermentation culture comprised in the composition of the invention to increase the shelf life of the cheese product.

Another advantage according to the present invention is the capacity of the EPS fermentation culture comprised in the composition of the invention to increase the yield of the cheese product.

Another advantage of the present invention is the increase of the stability of the cheese curd to physical manipulation that allows it to be treated with conventional curd manipulating equipment. This advantageous feature reduces the time of manipulation of the cheese curd.

Another advantage described herein is the capacity of the viable micro-organism of the fermentation culture to produce a homo-exopolysaccharide. The homo-exopolysaccharide has a high water binding capacity and can advantageously be used to modulate the moisture of the cheese product. It is preferred that the EPS fermentation culture contains viable lactic acid micro-organisms which are capable of producing homo-exopolysaccharides. Examples of such lactic acid micro-organisms include *Lactobacillus sakei* 570 or *Leuconostoc mesenteroides* 808.

Advantageously, the viable micro-organism of the EPS fermentation culture may be used to produce cheese based entirely on dairy products such as milk. In other words a cheese product can be produced from dairy products only, without the addition of for example sucrose. By way of example dairy products produced without the addition of sucrose would be beneficial to the dental health of the consumers of the cheese product.

It is also discussed herein to provide a cheese product comprising a viable micro-organism capable of producing an enzyme and an EPS where the expression and/or level of polymerisation has been modulated. The expression and/or level of polymerisation can be modulated by varying the number of viable micro-organisms, by altering the fermentation temperature and/or by altering the pH of the environment and/or by using an acceptor molecule such as maltose.

Accordingly, depending on the intended cheese production, the present application also describes a viable micro-organism, an enzyme and EPS the expression and/or polymerisation of which has been modulated to suit the production of different types of cheese.

Also described is a cheese product that is capable of being used in combination with different pharmaceutical or generally beneficial components to deliver medical or generally physiological benefit to the consumer. The composition may also be incorporated into a high fibre product.

The EPS fermentation culture can be used in combination with different components that are suitable for consumption to deliver said improvements. By way of example, when the EPS fermentation culture comprises a mono-EPS producing viable lactic acid micro-organism the transfer of homo-EPS into the whey stream may not affect the viscosity of the whey. In the event that the viscosity of the whey may be too high for ultrafiltration (UF) of whey it is contemplated that an enzyme such as Dextranse ™ which may increase the viscosity may be used. The enzyme Dextranse™ is generally used in the manufacture of sugar from beet and would be well known to those of skill in the art.

Advantageously, the viable micro-organism and/or enzyme produced by said micro-organism and/or EPS produced by said enzyme should remain effective through the normal "sell-by" or "expiration" date during which the cheese product is offered for sale by the retailer. Preferably, the effective time should extend past such dates until the end of the normal freshness period when cheese spoilage becomes apparent. The desired lengths of time and normal shelf life will vary and those of ordinary skill in the art will recognise that shelf-life times will vary between the different cheese products the size of the cheese product, storage temperatures, packaging material and packaging equipment.

## Micro-organism

The composition suitable for forming a cheese according to the present invention comprises a starter acidification culture and a separate EPS fermentation culture containing a viable micro-organism selected from the group consisting of *Streptococcus thermophilus* V3, *Lactococcus lactis ssp cremoris* 332, *Lactobacillus sakei* 570 deposited as DSM 15889 at the Deutsche Sammlung von Mikroorganismen und Zellkulturen GmbH, and *Leuconostoc mesenteroides* 808.

The term "micro-organism" encompasses micro-organisms and means a microscopic organism which may unicellular or multi-cellular which is capable of normal growth and development. The micro-organism may be a naturally occurring micro-organism or it may be a transformed micro-organism. The micro-organism may also be a combination of suitable micro-organisms.

It is to be understood that where reference is made in the present specification, including the accompanying claims to 'a' micro-organism or 'an' anti-microbial agent, such reference is meant to include one or more micro-organisms or one or more anti-microbial agents, and mixtures thereof, unless it is specifically stated otherwise in the text.

Preferably the micro-organism is a lactic acid bacterium (LAB). Preferably the LAB is capable of normal growth and development.

Optionally the LAB may be transformed by different techniques such as genetic techniques. As used herein the term transformed encompasses recombinant micro-organisms. The term "recombinant micro-organism" means a micro-organism which carries a recombinant nucleotide sequence coding for an enzyme which is capable of producing EPS such that both the enzyme and the EPS can be used as components of a composition as described herein. The transformed LAB may also have the capacity for example to utilise different enzyme substrates as a carbon source, to ferment at a different temperature range, exhibit resistance to bacteriophage attack, be capable of quicker acidification of the medium suitable for forming cheese when compared to the parent.

In a preferred aspect, the micro-organism may be selected from the group consisting of lactic acid bacterial genuses such as *Lactococcus, Streptococcus, Pediococcus, Enterococcus, Leuconostoc, Carnobacterium, Propionibacterium, Bifidobacterium* and *Lactobacillus* or combinations thereof.

The term "composition suitable for forming a cheese" as used herein describes a composition that is capable of being used to form a cheese product as described herein.

The composition according to the present invention comprises a starter acidification culture and an EPS containing fermentation culture containing a viable micro-organism selected from the group consisting of *Streptococcus thermophilus* V3, *Lactococcus lactis ssp cremoris 332, Lactobacillus sakei* 570 deposited as DSM 15889 at the Deutsche Sammlung von Mikroorganismen und Zellkulturen GmbH, and *Leuconostoc mesenteroides* 808.

## Starter acidification culture

The term "starter acidification culture" as used herein may be any suitable micro-organism culture that is capable of fermenting lactic acid.

Preferably the micro-organism of the starter acidification culture is a lactic acid bacterium.

The lactic acid bacterium of the starter acidification culture may be naturally occurring lactic acid bacterium or it may be transformed lactic acid bacterium. Preferably the starter acidification culture is a lactic acid bacterial (LAB) culture which is capable of normal fermentation of medium that is suitable for the manufacture of cheese. Optionally the LAB may be modified by different means such as genetic means. The modified LAB may have the capacity for example to utilise different enzyme substrates as a carbon source, to ferment at a different temperature range, exhibit resistance to bacteriophage attack, be capable of quicker acidification of the medium suitable for forming cheese when compared to the parent.

It is envisaged that the micro-organism of the acidification culture may comprise of from about 0.1% to about 3% from the total medium suitable for forming cheese.

The starter acidification culture can be a thermophylic lactic acid bacterium and/or a mesophylic lactic acid bacterium which includes but is not limited to the group consisting of *Lactococcus, Streptococcus, Pediococcus, Enterococcus, Leuconostoc, Carnobacterium, Propionibacterium, Bifidobacterium* and *Lactobacillus* genuses or mixtures thereof.

Preferably the lactic acid bacterium of the starter acidification medium belongs to at least one of the *Streprococcus* genus or *Lactococcus* genus.

Preferably the lactic acid bacterium of the starter acidification culture is capable of acidifying the medium that is suitable for forming cheese to a pH of from about 4.7 to 5.3. Preferably the pH of the acidified medium is from about 4.8 to 5.2. Preferably the pH of the acidified medium is from about 4.9 to 5.2. Preferably the pH of the acidified medium is from about 5.0 to 5.2. Preferably the pH of the acidified medium is from about 5.1 to 5.2.

Thus, a starter acidification culture preferably comprises a lactic acid bacterium which is mixed with a medium capable of being used for the formation of cheese such that the starter acidification lactic acid bacterium culture is capable of acidifying the medium to a pH of from about 4.7 to 5.3. Preferably the pH of the acidified medium is from about 4.7 to 5.2. Preferably the pH of the acidified medium is from about 4.8 to 5.2. Preferably the pH of the acidified medium is from about 4.9 to 5.2. Preferably the pH of the acidified medium is from about 5.0 to 5.2. Preferably the pH of the acidified medium is from about 5.1 to 5.2.

As used herein the term "acidification" of the medium suitable for forming cheese describes the pre-ripening stage of the method for forming cheese.

**EPS fermentation culture**

The term "EPS fermentation culture" as used herein describes a viable micro-organism which is capable of synthesising an enzyme that is capable of producing an EPS. The viable micro-organism culture may be any suitable micro-organism.

The term "viable micro-organism" means a micro-organism which is capable of normal growth, development and reproduction.

The viable micro-organism may be a naturally occurring viable micro-organism or it may be a transformed viable micro-organism. The viable micro-organism may also be a combination of suitable viable micro-organisms.

Preferably the viable micro-organism is a viable lactic acid bacterium (LAB).

In a preferred described aspect, the viable lactic acid bacterium as described herein may be selected from a group consisting of *Lactococcus, Streptococcus, Pediococcus, Enterococcus, Leuconostoc, Carnobacterium, Propionibacterium, Bifidobacterium* and *Lactobacillus* genuses and combinations thereof.

In a preferred described aspect, the viable lactic acid bacterium is a thermophilic and/or mesophilic bacterium.

In a preferred described aspect, the thermophilic lactic acid micro-organism is *Lactococcus lactic* ssp.

In a preferred aspect of the invention, the thermophilic lactic acid micro-organism contained in the EPS fermentation culture is *Lactococcus lactic* ssp. *cremoris 322.*

In a preferred described aspect the mesophilic viable micro-organism is *Lactobacillus sakei* ssp.

In a preferred aspect of the invention, the viable micro-organism contained in the EPS fermentation culture is *Lactobacillus sakei 570.*

In a preferred described aspect, the mesophilic viable micro-organism is *Leuconostoc mesenteroides* ssp.

In a preferred aspect of the invention, the viable micro-organism contained in the EPS fermentation culture is *Leuconostoc mesenteroides* 880.

Accordingly, the EPS fermentation culture of the composition of the invention contains a viable microorganism selected from the group consisting of *Streptococcus thermophilus* V3, *Lactococcus lactis ssp cremoris* 332, *Lactobacillus sakei* 570 deposited as DSM 15889 at the Deutsche Sammlung von Mikroorganismen und Zellkulturen GmbH, and *Leuconostoc mesenteroides* 808 which is capable of expressing an enzyme that can produce an EPS. Preferably the amount and type of the EPS is capable of being modulated such that the desired moisture level in the cheese curd and/or the cheese product according to the present invention is obtained.

The term "modulate" as used herein means to regulate, to alter or to vary. In other words, it relates to an increase or a decrease in a particular parameter as described herein. By way of example parameters that may be modulated include pH, temperature, time of acidification, time of fermentation, moisture content in the cheese curd or the cheese product, EPS formation, texture, taste, organoleptic properties or syneresis.

For some embodiments, the composition which is suitable for forming cheese comprises a starter acidification micro-organism and a viable micro-organism of the EPS fermentation culture which belong to the same lactic acid bacterial genus.

Preferably the micro-organism of the starter acidification culture and the viable micro-organism of the EPS fermentation culture belong to a different bacterial genus.

By way of example the starter acidification micro-organism belongs to the genus *Streptococcus* and the viable micro-organism of the EPS fermentation culture belongs to *Lactobacillus.*

In a preferred described aspect, the starter acidification micro-organism is *Streptococcus thermophilus* and the viable micro-organism of the EPS fermentation culture is *Lactobacillus sakei.*

In a preferred aspect of the invention, the starter acidification culture micro-organism is *Streptococcus thermophilus* TH-S 100 and the viable micro-organism of the EPS fermentation culture is *Lactobacillus sakei* 570.

In a preferred described aspect, the starter acidification culture micro-organism is *Streptococcus thermophilus* TH-S 100 and the viable micro-organism of the EPS fermentation culture is *Lactobacillus curvatus* 853.

In a preferred described aspect, the starter acidification culture micro-organism is *Streptococcus thermophilus* TH-S 100 and the viable micro-organism of the EPS fermentation culture is *Lactobacillus salivarius* 1502.

By way of example the starter acidification micro-organism belongs to the genus *Streptococcus* and the viable micro-organism of the EPS fermentation culture belongs to *Leuconostoc.*

In a preferred described aspect, the starter acidification micro-organism is *Streptococcus thermophilus* and the viable micro-organism of the EPS fermentation culture is *Leuconostoc mesenteroides.*

In a preferred aspect of the invention, the starter acidification culture micro-organism is *Streptococcus thermophilus* TH-S 100 and the viable micro-organism of the EPS fermentation culture is *Leuconostoc mesenteroides* 808.

In one aspect described herein, the EPS fermentation culture is formed *in situ* by cultivating the viable lactic acid micro-organism in a commercially acceptable medium with a suitable enzyme substrate. In other words, the EPS fermentation culture may be prepared independently or separately, before it is added to the medium suitable for forming a cheese in the cheese making process.

In one aspect described herein the *in situ* formed EPS fermentation culture may be added to the medium suitable for forming cheese together or concomitantly with the starter acidification micro-organism. It is envisaged that in this embodiment both the starter acidification culture and the EPS fermentation culture may affect the acidification of the medium.

It is anticipated that in this embodiment the acidity of the medium suitable for forming cheese may reach the desired pH range by modulating or varying the incubation temperature and/or the time of acidification and/or the amounts of EPS fermentation culture.

Thus, the mixture comprising the medium, the starter acidification culture and the EPS fermentation culture and may be incubation at a temperature in the range of from about 34 degrees to about 42 degrees. Preferably the mixture may be incubated at a temperature of about 34.5 degrees to about 41.5 degrees. Preferably the mixture may be incubated at a temperature of about 35 degrees to about 41 degrees. Preferably the mixture may be incubated at a temperature of about 35.5 degrees to about 40.5 degrees. Preferably the mixture may be incubated at a temperature of about 36 degrees to about 40 degrees. Preferably the mixture may be incubated at a temperature of about 3.65 degrees to about 39.5 degrees. Preferably the mixture may be incubated at a temperature of about 37 degrees to about 39 degrees. Preferably the mixture may be incubated at a temperature of about 37.5 degrees to about 38.5 degrees. Preferably the mixture may be incubated at a temperature of about 38 degrees.

Please note that as used herein the terms "degree(s)" and "°C" are used interchangeably and are intended to refer to the same temperature indicating parameters.

The mixture comprising the medium, the starter acidification culture and the EPS fermentation culture may be incubation for about 20 to about 60 minutes, preferably from about 25 to 55 minutes, preferably from about 30 to about 50 minutes, preferably from about 35 to 45 minutes, preferably about 40 minutes.

In this embodiment the amount of EPS fermentation culture added to the medium may be from about 12% to about 2% of the total medium suitable for forming cheese. Preferably the amount of EPS fermentation culture added to the medium is from about 11.5% to about 3.5%. Preferably the amount of EPS fermentation culture added to the medium is from about 11% to about 4%. Preferably the amount of EPS fermentation culture added to the medium is from about 10.5% to about 4.5%. Preferably the amount of EPS fermentation culture added to the medium is from about 10% to about 5%. Preferably the amount of EPS fermentation culture added to the medium is from about 9.5% to about 5.5%. Preferably the amount of EPS fermentation culture added to the medium is from about 9% to about 6%. Preferably the amount of EPS fermentation culture added to the medium is from about 8.5% to about 6.5%. Preferably the amount of EPS fermentation culture added to the medium is from about 8% to about 7%. Preferably it is about 7.5%.

Accordingly, by varying the temperature and/or the time of incubation and/or the amount of the EPS fermentation culture added with the starter culture to the medium it is possible to keep the acidity of the medium within the desirable pH range. That is, the different temperatures, time of incubation and the amount of EPS fermentation culture added to the medium with the starter acidification culture would be capable of maintaining the pH of the medium in the range of from about 4.7 to 5.3. Preferably the pH of the acidified medium in the presence of the EPS fermentation culture is from about 4.7 to 5.2. Preferably the pH of the acidified medium is from about 4.8 to 5.2. Preferably the pH of the acidified medium is from about 4.9 to 5.2. Preferably the pH of the acidified medium is from about 5.0 to 5.2. Preferably the pH of the acidified medium is from about 5.1 to 5.2.

In another embodiment the *in situ* formed EPS fermentation culture may be added to the medium after the acidification or pre-ripening stage in the cheese making process. In other words, the EPS fermentation culture may be added to the medium suitable for forming cheese after it has been acidified by the starter acidification culture. It is anticipated that in respect of this embodiment the above described pH range of the acidified medium may be maintained by varying the incubation temperature and the amount of the EPS fermentation culture that is added to the medium.

When the EPS fermentation culture is added to the medium as described herein, the viable micro-organism component of the EPS fermentation culture has the capacity of further synthesising an enzyme that is capable of further forming an EPS.

In addition the EPS fermentation culture may be neutralised and/or thermised before it is added to the medium.

Accordingly before the EPS fermentation culture is supplied to the medium it may be "neutralised" by the addition of any neutralising agent. By way of example the EPS fermentation culture may be neutralised by the addition of suitable amounts of $Ca(OH)_2$.

Treating the EPS fermentation culture with $Ca(OH)_2$ results in an EPS fermentation culture having a pH in the range of from 6.64 to 6.74. Preferably the pH of the neutralised EPS fermentation culture is in the range of from 6.65 to 6.73. Preferably the pH of the neutralised EPS fermentation culture is in the range of from 6.66 to 6.72. Preferably the pH of the neutralised EPS fermentation culture is in the range of from 6.67 to 6.71. Preferably the pH of the neutralised EPS fermentation culture is in the range of from 6.68 to 6.70. Preferably the pH of the neutralised EPS fermentation culture is in the range of from 6.69 to 6.70.

It is intended that by neutralising the EPS fermentation culture the viability of the micro-organism, the activity of the enzyme synthesised by the viable micro-organism and the functionality of the EPS are no adversely affected. In other words the neutralisation step does not impair the viability of the micro-organism, does not inactivate or denature the enzyme and does not prevent the functionality of the EPS.

As used herein the term "functionality of the EPS" means an EPS that is capable to acting as described herein.

It is also described that the addition of the neutralised EPS fermentation culture to the medium suitable for forming cheese does not adversely affect the desired pH. That is the pH of the medium that is suitable for forming cheese would be in the range of from about 4.7 to 5.3 by varying the amount of neutralised EPS fermentation medium and/or the incubation temperature and/or the time of the acidification period.

It is also described that before the EPS fermentation culture is supplied to the medium, it may be "thermised" by treating the culture at 65°C for up to about 20 seconds.

The term "thermise" refers to a quick heating step that is capable of incapacitating, inactivating or impairing the normal metabolic activity of mesophilic bacteria. It is envisaged that in order to obtain a thermised EPS fermentation culture, the conditions under which the culture is treated may be varied. The variations of the temperature for incapacitating, inactivating or impairing mesophilic lactic acid bacteria would be well known to those of skill in the art and may vary according to the particular species. By way of example the time period of the thermising step may be reduced if the EPS culture is treated at a temperature which is higher than 65°C.

It is intended that by thermising the EPS fermentation culture the viability of the micro-organism, the activity of the enzyme synthesised by the micro-organism and the functionality of the EPS are not adversely affected. In other words the thermising step is capable of incapacitating, inactivating or impairing the micro-organism, but not inactivate or denature the enzyme and does not prevent the functionality of the EPS. The thermising will have a different impact depending on the sensitivity of the viable micro-organism strain.

It is also described that the addition of the thermised EPS fermentation culture to the medium suitable for forming cheese does not adversely affect the desired pH. That is the pH of the medium that is suitable for forming cheese would be in the range of from about 4.7 to 5.3 by varying the amount of thermised EPS fermentation medium and/or the incubation temperature and/or the time of the acidification period.

In one preferred embodiment before the EPS fermentation culture is supplied to the medium used in the cheese making process the EPS fermentation culture may be "neutralised" and "thermised".

Accordingly, when the EPS fermentation culture is neutralised and/or thermised the suitable level of moisture content is obtained in the cheese curd and/or the cheese product.

**Enzyme synthesised by the viable LAB**

The present application also describes a composition that is suitable for forming a cheese comprising a starter acidification culture and a fermentation culture comprising a viable lactic acid bacterium that produces an effective and/or increased amount of glycosyltransferase (transglycosylase) enzyme.

The glycosyltransferase (transglycosylase) enzyme produced by the viable lactic acid bacterium may be a glucosyl transferase or a fructosyl transferase.

Preferably the enzymes are capable of producing an EPS.

Further examples of enzymes which may be produced by the viable micro-organism component of the EPS fermentation culture may be found in (PCT/GB2003/003436).

**EPS**

The application also describes an EPS fermentation culture comprises a suitable lactic acid bacterium that is capable of synthesising a glycosyltransferase (transglycosylase) enzyme that produces an EPS. The glycosyltransferase (transglycosylase) enzyme as described herein may be a glucosyl transferase or a fructosyl transferase for forming EPS.

The EPS can be any suitable EPS.

The term "polysaccharide" refers to a carbohydrate molecule that is composed of more than 10 sugar units where one sugar unit can be a mono-saccharide, di-, tri-, or tetra-saccharides.

The term "oligosaccharide" refers to a carbohydrate molecule which comprises less than 10 sugar molecules where the sugar molecules can be any one or more of mono-saccharides, di-, tri-, and tetra-saccharides.

Preferably, the polysaccharide and/or the oligosaccharide are composed of mono-saccharides and/or di-saccharides. By way of example, mono-saccharides include but are not limited to sugars such as glucose and fructose and di-saccharides include but are not limited to sugars such as sucrose, lactose and maltose.

The EPS may comprise homo-polysachride molecules and/or herero-polysacchride molecules.

As used herein the term "homo-polysaccharide" means a polysaccharide molecule which contains only one type of mono-saccharide molecule wherein the mono-saccharide molecule may be glucose, fructose or galactose.

As used herein the term "hetero-polysaccharide" means a polysaccharide molecule which is constructed from two of more of mono-saccharide, di-, tri-, or tetra-saccharide units. By may of a non-limiting example, mono-saccharides include sugars such as glucose, fructose or galactose while di-saccharides include sugars such as maltose, lactose or sucrose.

The amount of EPS and thereby the moisture of the cheese curd or the cheese can be modulated.

When used in the context of EPS modulate means that the level of polymerisation of the respective substrate can be regulated. Thus, the amount of EPS produces can be modulated for example by varying the number of viable micro-organisms, the length of the fermentation process, the temperature and the presence of different amount of maltose in the medium.

The amount of EPS produced during the *in situ* production of the EPS fermentation culture may be modulated by varying the pH of the fermentation. The pH range at which the amount of EPS production may be increased is in the range from pH 5.5 to pH 6.9, preferably at pH from 5.7 to pH 6.7, more preferably at pH from 5.9 to pH 6.5, even more preferably at pH from 6.1 to pH 6.3. The pH at which the amount of EPS can be reduced, in the range from 4.0 to 5.4 or from 7.0 to 8.0.

Advantageously the capacity to modulate the amount and type of EPS formed in the EPS fermentation culture allows for a better control of the moisture level of the cheese curd and/or the cheese product.

**Medium suitable for forming cheese.**

The present application also describes a medium that is suitable for forming cheese the medium comprising a composition containing a starter acidification culture and a viable lactic acid micro-organism where the viable lactic acid micro-organism produces effective and/or increased amounts of an enzyme capable of catalysing the formation of EPS.

As described herein the medium may be used to produce a cheese product characterised with an improvement in at least one of the texture, aroma, flavour, mildness, consistency, body, mouth feel, firmness, viscosity, gel fracture, wheying off, structure and/or organoleptic properties, nutrition and/or health benefits.

In addition or in the alternative the capacity to modulate the polymerisation process imparts the cheese curd greater stability and resilience to physical manipulation thus allowing the cheese curd to be treated with conventional cheese curd manipulating equipment. Examples of conventional cheese curd manipulating equipment would be well known to those of skill in the art.

As used herein the term "medium suitable for forming cheese" means any medium which is capable of supporting micro-organism growth and which is commercially acceptable for consumption such as for instance milk from dairy or a non-dairy origin.

Preferably the medium that is suitable for forming cheese is capable of supporting lactic acid bacterial growth.

The dairy medium may originate from any lactating livestock animal whose milk is useful as a source of human food. Examples of such livestock animals include cows, buffalo, goats, lama, sheep, camels and other ruminants.

In a preferred embodiment, cows' milk provides the dairy medium used for forming cheese according to the present invention.

"Milk" as used above includes cream, skimmed milk, semi-skimmed milk, full-fat milk, milk powder that has been reconstituted or recombined, milk that has been subjected to concentration method - such as evaporation or membrane filtration - or combinations thereof.

Other suitable medium which is capable of being used for cheese making include "non-dairy milk" that may be derived from plants such as soy or rice or it can be a synthetically generated milk.

Some cheese products may have a fat content of from about 60% to about 10% in dry matter. Any of these different fat content cheese products may benefit from the composition described herein.

According to one embodiment described herein the cheese product is Camembert. Camembert is a cheese product characterised with a fat content in the range of from about 40% to about 50% in dry matter.

The medium which is suitable for making a cheese as described herein may optionally be supplemented with is sucrose, and/or fructose, and/or glucose, and/or maltose, and/or lactose, and/or stacchyose and/or raffinose and/or verbascose and/or galactose.

Also described is a cheese product which has been made by using a medium suitable for making cheese comprising a starter acidification culture and an EPS fermentation culture wherein said EPS fermentation culture contains a viable micro-organism which comprises effective and/or increased amounts of glycosyltransferase (transglycosylase) enzyme or a fructosyl transferase enzyme capable of catalysing the formation of EPS.

Also described is a cheese product made by using a medium suitable for making cheese comprising a starter acidification culture and a viable lactic acid micro-organism which produces effective and/or increased amounts of a glycosyltransferase (transglycosylase) enzyme or fructosyl transferase enzyme capable of polymerising sucrose and converting it into an EPS which comprises at least a long chain polysaccharide or a short chain oligosaccharide which may be used for making cheese with optimised nutritional and/or health benefit.

Also described is a cheese product made by using a medium suitable for making cheese comprising a starter acidification culture and a viable *Leuconostoc mesenteroides* which produces effective and/or increased amounts of a glycosyl transferase (transglycosylase) enzyme or fructosyl transferase enzyme which is capable of polymerising lactose and converting it into an EPS. The formed EPS comprises at least a long chain polysaccharide or a short chain oligosaccharide which may be used for making cheese with optimised nutritional and health benefit.

Also described is a cheese product made by using a medium suitable for making cheese comprising a starter acidification culture and a viable *Leuconostoc mesenteroides* which produces effective and/or increased amounts of a glycosyl transferase (transglycosylase) or fructosyl transferase capable of polymerising maltose and converting it into an EPS which comprises at least a long chain polysaccharide or a short chain oligosaccharide which may be used for making cheese with optimised nutritional and/or health benefit.

Also described is a cheese product made by using a medium suitable for making cheese comprising a starter acidification culture and a viable *Leuconostoc mesenteroides* which produces effective and/or increased amounts of a glycosyl transferase (transglycosylase) or fructosyl transferase capable of polymerising raffinose, stacchyose or verbascose into EPS which comprises at least a long chain polysaccharide or a short chain oligosaccharide which may be used as a food component with optimised nutritional and health benefit. The formed EPS comprises at least a long chain polysaccharide or a short chain oligosaccharide which may be used as a food component with optimised nutritional and health benefit. The composition comprising the viable *Leuconostoc mesenteroides* which produces effective and/or increased amounts of a glycosyl (transglycosylase) or fructosyl transferase capable of polymerising raffinose, stacchyose or verbascose into EPS may also be used for making cheese which are characterised with a reduced gas production and/or a reduced flatulence.

Also described is a cheese product made by using a medium suitable for making cheese comprising a starter acidification culture and a viable *Lactobacillus sakei ssp., Lactobacillus plantarum ssp. or Lactobacillus salivarius ssp.* which can produce effective and/or increased amounts of the enzyme glucan sucrase which is capable of polymerising sucrose and converting it into EPS. The formed EPS comprises at least a long chain polysaccharide or a short chain oligosaccharide and may be used for making cheese with optimised nutritional and/or health benefit. The EPS which is formed by *Lactobacillus sakei ssp., Lactobacillus plantarum ssp. or Lactobacillus salivarius ssp.* using sucrose as a substrate is a homo-exopolysaccharide comprising glucose molecule monomers.

Also described is a cheese product made by using a medium suitable for making cheese comprising a starter acidification culture and a viable *Lactobacillus sakei ssp., Lactobacillus plantarum ssp. or Lactobacillus salivarius ssp.* which produce effective and/or increased amounts of the enzyme glucan sucrase which is capable of polymerising lactose and converting it into an EPS. The formed EPS comprises at least a long chain polysaccharide or a short chain oligosaccharide which may be used for making cheese with optimised nutritional and/or health benefit.

Also described is a cheese product made by using a medium suitable for making cheese comprising a starter acidification culture and a viable *Lactobacillus sakei ssp., Lactobacillus plantarum ssp. or Lactobacillus salivarius ssp.* which produce effective and/or increased amounts of the enzyme glucan sucrase which is capable of polymerising raffinose, stacchyose or verbascose and polymerising them to EPS. The formed EPS comprises at least a long chain polysaccharide or a short chain oligosaccharide which may be used for making cheese with optimised nutritional and/or health benefit. The composition comprising the viable *Lactobacillus sakei* ssp., *Lactobacillus plantarum* ssp. *or Lactobacillus salivarius* ssp. which produce effective and/or increased amounts of the enzyme glucan sucrase and the EPS which is formed from raffinose, stacchyose or verbascose as a substrate may be used for making cheese which is characterised with a reduced gas production or a reduced flatulence.

A cheese product which contains an EPS formed from raffinose, stacchyose or verbascose may be used to increase the beneficial, health promoting bacteria in the gastrointestinal tract. In other words, the cheese product has a potential of playing a probiotic role in the gastrointestinal tract.

Also, it is known that bloating can be due to an array of factors such as abnormal fermentation or irregular fermentation pattern that can be alleviated to some extent by among others the probiotic effect of the viable lactic acid bacteria and the EPS produced by the viable lactic acid bacteria. A bloating feeling in the abdomen may also be regarded as one of the side effects of intolerance to lactose.

While preparing the EPS fermentation culture for use as described herein it is also possible to adjust the ratio of sucrose/maltose, lactose/maltose or stacchyose/maltose of the medium during the fermentation such that a targeted molecular weight distribution of polysaccharide or oligosaccharide can be obtained. Advantageously, the ability to control the molecular weight of the polysaccharide or oligosaccharide can be used for regulating the moisture of the cheese curd and/or the cheese product. In addition or in the alternative, by modulating the molecular weight of the polysaccharide or oligosaccharide, it is possible to improve at least one of texture, aroma, flavour, mildness, consistency, body, mouth feel, firmness, viscosity, gel fracture, wheying off, syneresis, structure and/or organoleptic properties, nutrition and/or health benefits of the cheese product.

The medium that is suitable for forming cheese may optionally be supplemented with any one of a mono-saccharide, di-, tri-, or tetra-saccharide. Here, the cheese product that is produced by the starter acidification culture and the viable lactic acid micro-organism has one or more EPS wherein at least some (preferably a large proportion) of the EPS is/are homo-polysacharide molecules.

The medium that is suitable for forming cheese may optionally be supplemented with two or more of mono-saccharide, di-, tri-, or tetra-saccharides. Here, the cheese that is produced by the starter culture and the viable lactic acid micro-organism has one or more EPS wherein at least some (preferably a large proportion) of the EPS is/are heteropolysacharide molecules.

The medium that is suitable for making cheese according to the present invention may optionally be supplemented with yeast extract and/or magnesium ions ($Mg^{2+}$) in order to assist growth of the lactic acid micro-organisms which comprise the starter acidification culture micro-organism and the EPS fermentation culture viable micro-organism.

The capacity of the starter acidification culture and the viable lactic acid micro-organism to polymerise lactose would allow for the production of dairy products without the addition of the substrate sucrose. Such sucrose free products would have a reduced detrimental effect on the teeth of the consumer.

In addition the problems associated with the presence of lactose in cheese product such as premature changes of the taste, texture, syneresis, acidification and thus shorter shelf life, may be reduced or limited when using the composition as described herein.

## Preparation of the Composition

The composition may be prepared by an *in situ* process - of the type mentioned herein. In this case, suitable micro-organisms are present in a commercially acceptable medium that can support their growth and fermentation capacity.

Optionally, the components of the composition may be prepared in isolation and then be combined together to form the composition.

By way of example the starter acidification culture may be prepared *in situ* by growing the lactic acid micro-organism in a commercially acceptable medium. The *in situ* produced starter acidification culture may be stored in a form such that when added to the composition it is capable of reaching a cell density which would allow the starter culture to acidify the medium to a pH in the range of from 4.7 to 5.3.

The EPS may be produced *in situ* by growing the viable lactic acid bacteria of the EPS fermentation culture in a commercially acceptable medium under conditions where EPS is formed. The resulting EPS may optionally be isolated from the EPS fermentation culture by any suitable technique e.g. by means of a precipitation using an organic solvent in which the EPS is not soluble or has limited solubility. Another way of isolating the EPS is by removal of the water, e.g. by evaporation, membrane filtration or spray drying.

According to one of the aspects of the present invention, the EPS is produced *in situ* by growing the viable lactic acid bacterium *Lactobacillus sakei* 570 in commercially acceptable medium under conditions where EPS is formed and optionally isolating the EPS. For some embodiments of the present invention the commercially acceptable medium may be supplemented with a suitable enzyme substrate.

Alternatively, the composition described herein may be formed for example by combining recombinant micro-organisms which are grown in commercially acceptable medium, which do not necessarily have to be lactic acid micro-organisms.

As stated above, a recombinant micro-organism may carry a recombinant nucleotide sequence coding for an enzyme which is capable of producing EPS such that both the enzyme and the EPS can be used as components of the composition as described herein. As used herein the term "recombinant nucleotide" mean that the nucleotide sequence is derived from a different organism i.e. it is not a self nucleotide sequence.

Furthermore, the lactic acid micro-organism component of the EPS fermentation culture which is comprised in the composition of the present invention may also be grown separately in a commercially acceptable medium to a cell density such that it does not form EPS or enzyme which produces said EPS. It is important that the viability of the resulting culture is maintained which can be achieved by different methods known in the art for example by spray drying or freeze drying.

By producing the composition as described herein in a commercially acceptable medium, a cheese product containing said composition would not require labelling as containing an additive.

Preferably when formed *in situ* the EPS fermentation culture is producing at least the enzyme which is capable of forming the EPS.

According to one embodiment of the process invention the *in situ* production of the composition comprising growing the starter acidification culture and the viable lactic acid bacterium in a commercially acceptable medium such as dairy liquid medium optionally supplemented with extra carbon source which is also a suitable enzyme substrate such as the di-saccharides sucrose and/or maltose under conditions where enzyme is produced and EPS is formed.

The ratios of the di-saccharides can be varied or adjusted during fermentation so that a targeted molecular weight distribution of the EPS can be achieved. Therefore, by altering the sucrose and/or maltose ratios it is possible to artificially regulate the polymerisation process and thus modulate moisture level. The capacity to regulate the polymerisation process may in addition impart the cheese curd greater stability and resilience to physical manipulation. Thus the cheese curd may advantageously be treated with conventional cheese curd manipulating equipment. Such cheese curd manipulating equipment would be well known to those of skill in the art.

Preferably the cheese product obtained by said process is not thereafter subjected to an intensive shear treatment.

The composition or optionally each isolated component can advantageously be added into a suitable for cheese masking medium for the production of cheese and other cheese based or related products thereof.

Thus, it is also described that by altering the ratios of for example maltose and sucrose it is possible to modulate the degree of EPS polymerisation using maltose as an acceptor molecule.

Using the composition described herein would advantageously lead to the production of a cheese product with improved one or more of the texture, aroma, flavour, mildness, consistency, softness, body, mouth-feel, firmness, viscosity, gel fracture, shape, melting, wheying off, structure and/or organoleptic properties, less grittiness upon inclusion of whey protein, nutrition and/or health benefits.

**Large scale application.**

In one preferred embodiment, the composition of the invention is used for large scale applications.

Preferably the composition is produced in a quantity of from 0.1% per litre to about 15% per litre of the total cell culture volume after cultivation of the starter acidification culture and the viable lactic acid micro-organism.

Preferably the composition is produced in a quantity of from 0.5% per litre to about 12.5% per litre of the total cell culture volume after cultivation of the starter acidification culture and the viable lactic acid micro-organism.

Preferably the composition is produced in a quantity of from 0.5% per litre to about 10% per litre of the total cell culture volume after cultivation of the starter acidification culture and the viable lactic acid micro-organism.

Preferably the composition is produced in a quantity of from 2.5% per litre to about 7.5% per litre of the total cell culture volume after cultivation of the starter acidification culture and the viable lactic acid micro-organism.

Preferably the composition is produced in a quantity of from 2.5% per litre to about 5% per litre of the total cell culture volume after cultivation of the starter acidification culture and the viable lactic acid micro-organism.

## Combination with other components

The composition of the present invention may be used in combination with other components.

The combination may comprise the composition of the present invention and another components that are suitable for cheese making and animal or human consumption. Optionally or in addition the combination is capable of providing a medical or physiological benefit to the consumer.

Other components of the combination as described herein may include polydextrose, such as Litesse®, and/or a maltodextrin. These other components may be optionally added to the composition to assist the survival of the starter acidification culture and the viable lactic acid culture of the EPS fermentation culture.

Further examples of other suitable components which can be added to the combination in the cheese making process include one or more of: thickeners, gelling agents, emulsifiers, binders, crystal modifiers, sweeteners (including artificial sweeteners), rheology modifiers, stabilisers, anti-oxidants, dyes, enzymes, carriers, vehicles, excipients, diluents, lubricating agents, flavouring agents, colouring matter, suspending agents, disintegrants, granulation binders etc.

Preferably the other components include yeast extracts and magnesium ions ($Mg^{2+}$). These other components may be prepared by use of chemical and/or enzymatic techniques and/or isolated from their natural environment.

As used herein the term "thickener or gelling agent" as used herein refers to an agent or a substance that prevents separation by slowing or preventing the movement of particles, either droplets of immiscible liquids, air or insoluble solids. Thickening occurs when individual hydrated molecules cause an increase in viscosity, slowing the separation in the cheese product. Gelation occurs when the hydrated molecules link to form a three-dimensional network that traps the particles, thereby immobilizing them in the cheese product.

The term "stabiliser" as used here is defined as an ingredient or combination of ingredients that keeps a product (e.g. a cheese product) from changing over time. The term changing over time may be used in relation to for example colour changes, premature acidification, premature ripening, protein separation, grittiness, syneresis or general reduction of the shelf life of the cheese product.

The term "emulsifier" as used herein refers an ingredient or combination of ingredients (e.g. a cheese product ingredient) that prevents the separation of emulsions. Emulsions are two immiscible substances, one present in droplet form, contained within the other. Emulsions can consist of oil-in-water, where the droplet or dispersed phase is oil and the continuous phase is water; or water-in-oil, where the water becomes the dispersed phase and the continuous phase is oil.

Foams, which are gas-in-liquid, and suspensions, which are solid-in-liquid, can also be stabilised through the use of emulsifiers. Aeration can occur in three phase systems where air is entrapped by liquid oil then stabilised by agglomerated fat crystals stabilised with an emulsifier. Emulsifiers have a polar group with an affinity for water (hydrophilic) and a nonpolar group that is attracted to oil (lipophilic). They are absorbed at the interfaces of the two substances, providing an interfacial film acting to stabilise the emulsion. The hydrophilic/lipophilic properties of emulsifiers are affected by the structure of the molecule. These properties are identified by the hydrophilic/lipophilic balance (HLB) value. Low HLB values indicate greater lipophilic tendencies which are used to stabilise water-in-oil emulsions. High HLB values are assigned to hydrophilic emulsifiers, typically used in oil-in-water emulsions. These values are derived from simple systems. Because different types of cheese which can be prepared according to the method of cheese making described herein often contain other ingredients that affect the emulsification properties, the HLB values may not always be a reliable guide for emulsifier selection.

The term "crystal modifier" as used herein refers to an ingredient (e.g. a cheese ingredient) that affects the crystallisation of either fat or water. Stabilisation of ice crystals is important for two reasons. The first is directly related to the product stability from a separation standpoint. The more freeze/thaw cycles a cheese product encounters, the larger the ice crystals become. These large crystals can break down product structure, either naturally occurring, as in the case of cell walls, or that which is created by "elation".

Because the water is no longer held in place, the cheese product may exhibit excessive syneresis, or weeping, after thawing. Furthermore, in the case of a product that is consumed frozen, these large crystals may result in an undesirable, gritty mouth feel.

Examples of disintegrants include one or more of: starch (preferably corn, potato or tapioca starch), sodium starch glycollate, croscarmellose sodium and certain complex silicates.

Examples of granulation binders include one or more of: polyvinylpyrrolidone, hydroxypropylmethylcellulose (HPMC), hydroxypropylcellulose (HPC), sucrose, maltose, gelatin and acacia.

Examples of lubricating agents include one or more of: magnesium stearate, stearic acid, glyceryl behenate and talc.

The other components may be used simultaneously (e.g. when they are in admixture together or even when they are delivered by different routes) or sequentially (e.g. they may be delivered by different routes).

Preferably, when the composition of the present invention is admixed with any other components, the lactic acid micro-organism of the EPS fermentation culture remain viable.

As used herein the term "component suitable for animal or human consumption" means a component which is or can be added to the composition of the present invention as a supplement which may be of nutritional benefit, a fibre substitute or have a generally beneficial effect to the consumer. Preferably, the ingredients will be able to improve the shelf life of the product and stability of the viable culture.

The components may be prebiotics such as alginate, xanthan, pectin, locust bean gum (LBG), inulin, guar gum, galacto-oligosaccharide (GOS), fructo-oligosaccharide (FOS), lactosucrose, soybean oligosaccharides, palatinose, isomalto-oligosaccharides, gluco-oligosaccharides and xylo-oligosaccharides.

As used herein the term "binder" refers to an ingredient or a combination of ingredients (e.g. a cheese ingredient) that binds the cheese product through a physical or chemical reaction. By way of example during "elation" water is absorbed, providing a binding effect. However, binders can also absorb liquids, such as oils, holding them within the cheese product. For some embodiments binders would be used in solid or low-moisture or low water cheese products for instance hard cheese or semi-hard cheese.

It has been suggested that EPS may have the capacity to act as a binder.

Here the term "low water" or "low moisture" are used interchangeably and mean any cheese product with less than 20% water, preferably less than 19%, preferably less than 18%, preferably less than 17%, preferably less than 16%, preferably less than 15%, preferably less than 14%, preferably less than 13%, preferably less than 12%, preferably less than 11%, preferably less than 10% or less per weight.

Preferably, binders would typically be used in high-moisture or high-water cheese products for instance soft cheese products.

Here the terms "high water" or "high-moisture" are used interchangeably and mean any cheese product with more than 20% water content, preferably more than 25%, preferably more than 30%, preferably more than 40%, preferably more than 50%, preferably more than 60%, preferably more than 70% or more per weight.

The suitable amount of the composition to be used in the combination will depend on the cheese product and/or the method of producing the cheese product and/or the intended use of the cheese product. The amount of starter acidification culture and the EPS fermentation culture comprising the viable micro-organism and/or enzyme produced by said micro-organism and/or EPS produced by said enzyme used in the compositions should be a sufficient amount to be effective and to remain sufficiently effective to improve at least one of the texture, aroma, flavour, mildness, consistency, body, mouth feel, syneresis, viscosity, structure and/or organoleptic properties, nutrition and/or health benefits of food products containing said composition. This length of time for effectiveness should extend up to at least the time of utilisation of the product.

In one aspect, the present invention is based in part on the realisation that yields of cheese - such as soft cheese - may be improved by using the composition according to the present invention which may be further improved by the addition of an enzyme lipid acyltransferase. In addition or alternatively, the cheese may have a reduced cholesterol level or enhanced content of phytosterol/stanol esters.

The increase in the yield of the cheese product may be by 0.1%, preferably by 0.5%, preferably by 1%, preferably by 2%, preferably by 4%, preferably by 8%, preferably by 10%, preferably by 15% or more.

### Concentrates

The present invention also provides a composition as claimed herein in the form of a concentrate.

Typically the concentrate comprises a substantially high concentration of starter acidification culture and a viable lactic acid micro-organism, and/or an enzyme produced by said viable lactic acid micro-organism and/or and EPS produced by said enzyme. Optionally each component of the composition may be prepared and maintained as a separate concentrate entity which may in turn be combined to form a composition when added separately, simultaneously or sequentially.

Powders, granules and liquid compositions in the form of concentrates may be diluted with water or re-suspended in water or other suitable diluents, for example, an appropriate growth medium such as milk or mineral or vegetable oils or suitable enzyme substrate, to give compositions ready for use in a cheese making process. Preferably the diluent is a commercially acceptable diluent.

The combinations of the present invention in the form of concentrates may be prepared according to methods known in the art.

In one aspect the product is contacted by a composition in a concentrated form. Preferably, the product is contacted by a spray-dried and/or resuspended composition.

As used herein the term "contacted" refers to the indirect or direct application of the composition to the medium that is suitable for forming cheese. Examples of the application methods which may be used, include, but are not limited to, direct application by mixing the composition with the medium or spraying the composition onto the medium that is suitable for forming cheese.

The compositions of the present invention may be spray-dried or freeze-dried by methods known in the art.

Typical processes for making particles using a spray drying process involve a solid material which is dissolved in an appropriate solvent (e.g. a culture of a micro-organism in a fermentation medium). Alternatively, the material can be suspended or emulsified in a nonsolvent to form a suspension or emulsion. Other ingredients (as discussed above) or components such as anti-microbial agents, stabilising agents, dyes and agents assisting with the drying process may optionally be added at this stage.

The solution then is atomised to form a fine mist of droplets. The droplets immediately enter a drying chamber where they contact a drying gas. The solvent is evaporated from the droplets into the drying gas to solidify the droplets, thereby forming particles. The particles are then separated from the drying gas and collected.

## Products

Any product which can benefit from the composition according to the present invention may be used in the present invention. These include but are not limited to fruit conserves and dairy foods and dairy food-derived products, cosmetic and pharmaceutical products.

Preferably the product is a cheese product.

The term "cheese product" as used herein describes a fresh or matured product and may be a hard cheese - such as extra hard, hard pressed cheese, hard with eyes, semi-soft or surface ripended; blue cheese - such as internal-mould ripened or a soft cheese.

Preferably the cheese product may be a soft cheese product - such as mould-ripened, lactic cheese, cottage cheese, whey cheese or processed cheese.

Preferably the cheese product is a soft cheese product.

Preferably the soft cheese product has a suitable moisture level of the cheese product as described herein is in the range of from about 30% to about 60% per weight.

Preferably the soft cheese product has a suitable moisture level of the cheese product as described herein is in the range of from about 35% to about 55% per weight.

Preferably the soft cheese product has a suitable moisture level of from about 40% to about 55% per weight.

Preferably the soft cheese product has a suitable moisture level of from about 45% to about 50% per weight.

Soft cheese products that may be produced by using the composition of the present invention include but are not limited to Babybel, Beer Cheese, Bel Paese, Bergader (veined), Bleu d'Avergne (veined), Boursault, Brie, Brillat Savarin, Brinza (or bryndza , brynza), Caciocavallo, Caciotta, Caerphilly, Camembert, Caprice des Dieux, Carre de l'Est, Chabichou, Chaource, chevre = chèvre, Cottage Cheese, Coulommiers, Crema Danica = Crema Dania, Doppelrhamstufe, Excelsior, Explorateur = l'Explorateur, feta, Gorgonzola (veined), hand = handkäse = handkase = harzer kase = harzer käse, Harz, Havarti (has holes), Kernhem, Klosterkaese, kochkäse = kochkase, Liederkranz, Limburger, Mainz , Manouri cheese, Margotin (with pepper and herbs), Maroilles, Mascarpone, Mozzarella, Munster Paglietta, Neufchatel, Pannerone (holes), Pont l' Evêque, Prince Jean, Pyramide, Reblochon cheese, Ricotta = ricotta salata, robiola = robiola Lombardia = robiola (aged), Scamorza, Schloss = Schlosskäse = Schlosskase = castle cheese, Selva, St. Andre = Saint André, Stracchino = Crescenza, Taleggio, Telemea = Teleme, Tetilla (holes), Tilsit(holes), Torta del Cesar (holes), Tupi (cheese product), Vacherin-Fribourgeois, Weichkaese.

Preferably the soft cheese product is a Camembert cheese product.

For general teachings on the different types of cheese e.g. a fresh or matured product which may be a hard cheese - such as extra hard, hard pressed cheese, hard with eyes, semi-soft or surface ripened; blue cheese - such as internal-mould ripened or a soft cheese products and the known methods for their manufacture, reference is made to the Encyclopaedia of Food Science and Food Technology, Volume 2, p 802-856 Edited by Macrae, Robinson & Sadler, Academic Press.

## Method of Cheese making

The present application describes a cheese product that has been made using a composition suitable for forming cheese comprising a starter acidification culture and an EPS fermentation culture containing a viable micro-organism which is capable of synthesising an enzyme which produces an EPS. The present invention provides a cheese product that has been made using a composition suitable for forming cheese comprising a starter acidification culture and an EPS fermentation culture as claimed herein.

The present application also describes methods of obtaining a cheese product comprising adding to the medium suitable for forming cheese a composition comprising a starter acidification culture and a fermentation culture comprising a viable micro-organism which is capable of synthesising an enzyme which produces an EPS.

A medium that is suitable for consumption comprising the composition according to the present invention is also described.

Accordingly the skilled person would be aware of different types of cheese products and the methods of making them. It is intended that the composition of the present invention may be used in any one of the known methods of forming different types of cheese in order to produce a cheese product.

By way of a non-limiting example a method that can be used to form a cheese product using the composition according to the present invention is described below.

As stated above the different components of the composition namely a starter acidification culture and an EPS fermentation culture comprising a viable lactic acid micro-organism and/or an enzyme capable of forming an EPS and/or the EPS may be added to the medium suitable for forming cheese separately, simultaneously or sequentially.

It is envisaged that the composition as described herein when added to the medium suitable for forming cheese should be at a level of from about 0.1% to about 15% per weight. It is anticipated that the micro-organism of the acidification culture would comprise of from about 0.1% to about 5% of the total medium.

The amount of the EPS fermentation culture added to the medium may be from about 12% to about 2% of the total medium. Preferably the amount of EPS fermentation culture added to the medium is from 11% to about 3%. Preferably the amount of EPS fermentation culture added to the medium is from 10% to about 4%. Preferably the amount of EPS fermentation culture added to the medium is from 9% to about 5%. Preferably the amount of EPS fermentation culture added to the medium is from 8% to about 6%. Preferably the amount of EPS fermentation culture added to the medium is from 7.5% to about 6.5%. As stated above, by varying the amount of EPS fermentation culture that is added to the medium suitable for forming cheese, it would be possible to maintain the pH of the acidified medium and the moisture content of the curd and the cheese.

Optionally the medium suitable for cheese making may be supplemented with a predetermined quantity of e.g. 50% CaCl2 solution. The medium may also optionally be supplemented with a suitable enzyme substrate for example sucrose.

It is preferred that for some embodiments for example when preparing Camembert cheese, fungal (mould) spores may be added at the pre-acidification stage of the cheese making process. The fungal spores may originate from *P. candidum* or *P. camemberti.*

Accordingly a medium that is suitable for making cheese is capable of being acidified by the starter acidification culture.

The EPS fermentation culture may be added to the medium that is suitable for making cheese before, after or during the acidification of the medium.

In some embodiments the EPS fermentation culture may be neutralised and/or thermised. It is intended that the EPS fermentation culture does not adversely affect the pH of the acidified medium.

Thus, the acidified mixture containing the starter acidified culture and the EPS fermentation culture has a pH of from about 4.7 to 5.3. Preferably the pH of the acidified mixture is from about 4.8 to 5.3. Preferably the pH of the acidified mixture is from about 4.9 to 5.2. Preferably the pH of the acidified mixture is from about 5.0 to 5.2.

As stated above at this stage of the method, the pH of the mixture may be maintained within the above range by adding different amounts of the EPS fermentation culture and by modulating the incubation temperature.

Thus, the mixture comprising the medium, the starter acidification culture and the EPS fermentation culture are incubation at a temperature in the range of from about 34 degrees to about 42 degrees. Preferably the mixture is incubated at a temperature of about 34.5 degrees to about 41.5 degrees. Preferably the mixture is incubated at a temperature of about 35 degrees to about 41 degrees. Preferably the mixture is incubated at a temperature of about 35.5 degrees to about 40.5 degrees. Preferably the mixture is incubated at a temperature of about 36 degrees to about 40 degrees. Preferably the mixture is incubated at a temperature of about 3.65 degrees to about 39.5 degrees. Preferably the mixture is incubated at a temperature of about 37 degrees to about 39 degrees. Preferably the mixture is incubated at a temperature of about 37.5 degrees to about 38.5 degrees. Preferably the mixture is incubated at a temperature of about 38 degrees.

Typically the acidification step is from about 20 to about 60 minutes, preferably from about 25 to 55 minutes, preferably from about 30 to about 50 minutes, preferably from about 35 to 45 minutes, preferably about 40 minutes.

As stated above, according to one embodiment, the EPS fermentation culture may be added to the cheese making process after the acidification step. That is, the EPS fermentation culture may be added to the acidified medium after it has been acidified by the starter acidification medium. Accordingly, when the EPS fermentation culture is added to the medium after the acidification step, it may be possible to modulate the moisture of the curd and/or the cheese by varying the amounts of the EPS fermentation culture.

The acidified mixture is then subjected to coagulation using a coagulating agent. Typically a coagulating agent (e.g., rennet such as Chymosin generally at about 1:15 000 or 250 ml rennet per 1,000 litres of medium) is added. The resulting mixture is agitated for about 5 minutes after which it is incubated for about 1 to about 25 minutes at a temperature of about 34 degrees to about 42 degrees. Preferably the rennet is added to the mixture for about 5 to about 20 minutes at a temperature of about 35 degrees to about 41 degrees. Preferably the rennet is added to the mixture for about 10 to about 15 minutes at 36 degrees to about 39 degrees.

Preferably the pH of the medium during the rennet treatment stage is from about 6.2 to 6.6. Preferably the pH during the coagulation step is from about 6.3 to about 6.5. Preferably the pH during the coagulation step is about 6.4.

After the coagulation of the curd the coagulum may be cut using any suitable curd cutting devise for example Omega" (12.8 mm) knives.

After the curd has been cut the resulting curd grains or fragments are agitated in the whey for about 30 minutes, preferably for about 40 minutes, preferably for about 50 minutes preferably for about 60 minutes.

In another aspect of the present invention the different amount and type of EPS may modulate the moisture content in the curd during the curd processing. That is the presence of EPS in the curd has the capacity to limit, decrease or reduce the release or loss of moisture from the curd during manipulation of the curd.

Thus, according to one preferred aspect of the present invention presence of different amount and type of EPS has the capacity to increase, better or improve the resilience of the curd to physical manipulations such that the curd may be manipulated with conventional curd processing equipment. Such equipment would be well known to those of skill in the art.

The presence of different amount and type of EPS in the curd allows processing with a reduced moisture loss. Accordingly the presence of different amount and type of EPS in the curd is capable of reducing the moisture release during the ripening stage by 1%, 2%, 3%, 4%, 5%, 6%, 7%, 8% 9% 10% or more when compared to a control curd sample which does not contain the composition according to the present invention.

According to one aspect of the present invention the presence of different amount and/or type of EPS in the curd has the capacity to maintain the moisture in the curd during mould formation or shaping of the cheese.

It is anticipated that most of the moisture loss that is observed during the cheese making process is at the stage of moulding.

Advantageously the different amount and type of EPS in the curd allows moulding with a reduced moisture loss. Accordingly the presence of different amount and type of EPS in the curd is capable of reducing the moisture release during the moulding stage by 1%, 2%, 3%, 4%, 5%, 6%, 7%, 8% 9% 10% or more when compared to a control curd sample which does not contain the composition according to the present invention.

According to one aspect of the present invention the different amount and type of EPS present in the curd is capable of modulating the moisture level in the curd during the tapping off or dripping off stage. The capacity of EPS to retain water at this stage of the cheese making process would be advantageous in obtaining the target water or moisture level immediately after the cooling/brining stage of the process.

As used herein the terms "tapping off" or "dripping off" describe the stage of draining the whey away from the curd.

The presence of different amount and type of EPS in the curd is capable of modulating the moisture level in the curd during the tapping off stage by at least 1%, preferably by at least 2%, preferably by at least 3%, preferably by at least 4%, preferably by at least 5%, preferably by at least 6%, preferably by at least 7%, preferably by at least 8%, preferably by at least 9%, preferably by at least 10%, preferably by at least 11%, preferably by at least 12%, preferably by at least 13%, preferably by at least 14%, preferably by at least 15%, preferably by at least 16%, preferably by at least 17%, preferably by at least 18%, preferably by at least 19%, preferably by at least 20%, preferably by at least 21%, preferably by at least 22%, preferably by at least 23%, preferably by at least 24%, preferably by at least 25%, preferably by at least 26%, preferably by at least 27%, preferably by at least 28%, preferably by at least 29%, preferably by at least 30% or more when compared to a control curd sample which has not been formed with the composition according to the present invention.

Preferably during the dripping off stage the curd would contain from about 16% total solids to about 60% total solids.

Preferably during the dripping off stage the curd would contain from about 20% total solids to about 55% total solids.
Preferably during the dripping off stage the curd would contain from about 25% total solids to about 50% total solids.
Preferably during the dripping off stage the curd would contain from about 30% total solids to about 40% total solids.

Preferably the capacity of EPS to modulate the moisture level in the curd would be advantageous in obtaining the target water level immediately after the cooling/brining stage of the process as described below.

During the tapping off stage, the curd in the shapes/moulds is incubated at a temperature in the range of from about 21 degrees to 26 degrees, preferably from about 21.5 to about 25.5, preferably from about 22 degrees to 25 degrees, preferably from about 22.5 to about 24.5. Preferably from about 23 to 24 degrees.

Preferably the pH of the curd during the tapping off stage is in the range of from about 5.6 to about 6.5, preferably from about 5.7 to about 6.4, preferably from about 5.8 to about 6.2, preferably the pH of the curd is from about 5.9 to 6.2. It is preferred that the pH of the curd is less than about 6.2.

Typically the incubation period of the curd in the shapes/moulds is the time which it takes for the pH of the curd to reach the above pH range.

After the tapping off step of the cheese making process the curd which is positioned in the shapes/moulds may be placed at a temperature range of from about 21 degrees to 26 degrees, preferably from about 21.5 to about 25.5, preferably from about 22 degrees to 25 degrees, preferably from about 22.5 to about 24.5, preferably from about 23 to 24 degrees and turned over 4 to 6 times within 4 to 5 hours and then occasionally until pH reaches a range of from 4.6 to 5.3, preferably until the pH is in the range of from 4.7 to 5.2. Preferably the pH of the curd is about 5.1. Preferably the pH is about 5.2. This stage of the cheese making process has been termed "turn-over" or "draining stage" when whey is further removed from the curd.

Following the draining stage, the shapes/moulds containing the curd are cooled at temperature of approximately about 10 degrees to 14 degrees, preferably at about 11 degrees to 13 degrees. Preferably the cooling of the curd takes place at about 12 degrees.

During the cooling process the pH is maintained in the range of about 5.0 to 5.4, preferably the pH is in the range of from about 5.05 to 5.35, preferably the pH is in the range of about 5.1 to 5.3, preferably the pH is in the range of about 5.15 to 5.25, preferably the pH is about 5.2.

The time period of cooling is from about 20 to about 26 hours, preferably from about 21 to 25 hours, preferably from about 22 to 24 hours. Preferably the curd is cooled for about 24 hours.

After the cooling a raw-cheese product is formed. The term "raw-cheese" as used herein means a cheese product that is not been treated by brine salting and is not mature enough to be consumed as an end cheese product.

The raw-cheese may optionally be incubated in brine salt. This stage of the process is known as brining. The raw-cheese may be incubated in brine salt from about 40 minutes to 120 minutes, preferably from about 50 minutes to 100 minutes, preferably for about 75 minutes.

The pH of the brining stage is maintained within a pH range of from abut 4.5 to 5.3, preferably from about 4.6 to about 5.2, preferably from about 4.7 to 5.1, preferably from about 4.8 to 5.0. Preferably the pH of the raw-cheese is maintained at about 5.2.

Optionally or in the alternative the raw-cheese may have salt applied on the surface of the cheese such that fungal spores may optionally be applied superficially. The mould spores may be sprayed onto the surface of the salted raw-cheese.

It is within the context of the present invention that the presence of different amount and/or type of EPS is capable of maintaining the moisture in the cheese curd in the range of from about 40% or 55% when compared to a control cheese curd sample that has not been formed with the composition according to the present invention.

The moisture level immediately after the cooling/brining stage of the cheese making process is termed target moisture level.

Preferably the target moisture level maintained in the cheese curd is about 50% just after the cooling/brining stage.

Ripening of the cheese curd into cheese typically takes place at a temperature range of from about 14 to about 18 degrees, preferably from about 15 to about 17 degrees, preferably about 16 degrees. It is preferred that the ripening temperature is at about 16 degrees.

According to one aspect of the present invention the different amount and/or type of EPS may limit, minimise or reduce the loss of moisture content from the cooling/brining stage to the ripe stage.

Preferably the product has less than 5% loss of moisture from the cooling/brining step to the ripe stage.

Preferably the moisture loss of the cheese product from the cooling/brining step to the ripe stage is less than 4%. Preferably the moisture loss of the cheese product from the cooling/brining step to the ripe stage is less than 3%. Preferably the moisture loss of the cheese product from the cooling/brining step to the ripe stage is less than 2%. Preferably the moisture loss of the cheese product from the cooling/brining step to the ripe stage is less than 1%. Preferably the moisture loss of the cheese product from the cooling/brining step to the ripe stage is less than 0.5%.

It is envisaged that there may be no apparent detectable loss of moisture from the cooling/brining step to the ripe stage of the cheese making process.

A cheese product characterised with less than 5% moisture loss from the cooling/brining step and the ripe stage of the cheese making process would be maintained within a pH range of from about 5.5 to 6.0, preferably from about 5.55 to 5.95, preferably from about 5.6 to 5.9, preferably from about 5.65 to 5.85, preferably from about 5.7 to 5.8, preferably about 5.75.

The capacity of the composition as described herein to maintain the pH of the cheese product within the above described range would potentially benefit the cheese by delaying or preventing for example the growth of aciduric and pathogenic micro-organisms such as *E.coli* 0157 and/or *Listeria* during the shelf life of the cheese.

During the ripening stage the cheese is placed at about 12 degrees to about 18 degrees, preferably from about 13 degrees to about 17 degrees, preferably from about 14 to about 16 degrees. Preferably the cheese which is to be ripened is placed at about 16 degrees. The ripening may take place for about 6-12 days, with daily turning, until a luxurious growth of white mould is evident. Alternatively, the cheese can be ripened on plastic mats in large plastic tubs with the lids slightly open to some oxygen entry for mould growth.

After the ripening stage the cheese product may be packed and allowed to ripen further at a temperature range of from 3 degrees to 7 degrees, preferably in the range of from 4 degrees to 6 degrees.

Cheese products obtained by using the composition described herein or according to the present invention may have a longer shelf life. The shelf life of a particular cheese product may vary depending on the type of cheese that is produced.

The shelf life of a particular cheese product would be well known to those of skill in the art. Thus, according to the present invention it may be possible to extend the shelf life of the cheese product by at least 1 day, preferably by 2 days, preferably by 3 days, preferably by 4 days, preferably by 5 days, preferably by 6 days, preferably by 7 days or more.

The ripening process also is sometimes referred to as "aging", "curing" or "maturation." All of the major components of cheese, i.e., carbohydrates, protein, and fat, are subject to change during aging. Through a complex variety of metabolic processes, e.g., enzymatic lipolysis and proteolysis, these principal components are metabolized to lactic acid, peptides, amino acids, and fatty acids. These may contribute to a mobilisation of water that may lead to syneresis in the cheese product and thus adversely affect the flavour, acidification of the product and reduction in the shelf life of the product.

Thus according one aspect a cheese product obtained according to the method described herein comprises a starter acidification culture and an EPS fermentation culture consisting of a viable lactic acid micro-organism, an enzyme derived from said viable lactic acid micro-organism capable of producing an EPS and an EPS produced by said enzyme, wherein said EPS fermentation culture improves at least one of texture, aroma, flavour, mildness, consistency, body, mouth feel, firmness, viscosity, gel fracture, wheying off, syneresis, shape, structure and/or organoleptic properties, nutrition and/or health benefits of the cheese product containing said EPS as described herein.

## Functional foods

The composition of the present invention may also be - or may be added to - any functional food.

As used herein, the term "functional food" means a product which is capable of providing not only a nutritional effect and/or a taste satisfaction, but is also capable of delivering a further beneficial effect to the consumer.

Accordingly, functional foods are ordinary foods that have components or ingredients (such as those described herein) incorporated into them that impart to the food a specific functional - e.g. medical or physiological benefit - other than a purely nutritional effect.

Although there is no legal definition of a functional food most of the parties with an interest in this area agree that they are foods marketed as having specific health effects.

Some functional foods are nutraceuticals. Here, the term "nutraceutical" means a food which is capable of providing not only a nutritional effect and/or a taste satisfaction, but is also capable of delivering a therapeutic (or other beneficial) effect to the consumer. Nutraceuticals cross the traditional dividing lines between foods and medicine.

Surveys have suggested that consumers place the most emphasis on functional food claims relating to heart disease. Preventing cancer is another aspect of nutrition which interests consumers a great deal, but interestingly this is the area that consumers feel they can exert least control over. In fact, according to the World Health Organization, at least 35% of cancer cases are diet-related. Furthermore claims relating to osteoporosis, gut health and obesity effects are also key factors that are likely to incite functional food purchase and drive market development.

According to one aspect the composition comprising a starter acidification culture and an EPS fermentation culture which is capable of synthesising an enzyme that forms an EPS may be added to or used in the preparation of a functional food product where the product is capable of imparting nutritional and a health benefit to the consumer.

## Fibre Supplement

In another aspect, the composition of the present invention may be used as - or in the preparation of - a fibre supplement.

Initially, the success of a food product virtually hinged on the word "fibre" or, subsequently, "bran". Despite conflicting studies on fibre's specific health attributes, the overall consensus among experts and consumers is that most people need more fibre in their diet. Fibre has further proven to be useful for its functional properties, such as water absorption and bulkbuilding in reduced-fat foods.

Fibre has gone by a number of names over the years, including "roughage," "bulk," "bran", "fibre", "plant residue", "plantix" and "unavailable carbohydrates". Even today, devising a concise, yet complete, definition for dietary fibre is no simple task because dietary fibre is a complex matrix of various components defined differently among various scientific disciplines.

Here, the term fibre is used in the context of food and as such it is referred to as non-digestible material. Specifically, fibre consists of cellulose, hemicellulose, pectins, gums, mucilages and lignin.

Not every fibre source contains all of these components. Actually, it is the sheer number of potential combinations that results in the wide variety of different physiological and functional effects observed in different fibre ingredients. By the same token, not every fibre source is 100% dietary fibre.

"Total dietary fibre (TDF) is defined as non-digestible carbohydrates," says Diane Lardiere, national sales and marketing manager, Canadian Harvest, Cambridge, MN. "Wheat bran is only 40% TDF, but is considered a fiber ingredient".

Thus, the composition of the present invention may be added to - fiber supplements.

The composition of the invention may be used as a supplement to a diet in combination with different conventional fiber sources as detailed above.

The recommended dose of fiber intake for adults is between 20 and 35 grams per day or 10-13 grams per every 1000 calories consumed and for children, generally, the intake is based on their age or weight 0.5 grams of fiber per kilogram of body weight (or 0.23 grams per pound of body weight) with an upper limit of 35 grams of fiber per day.

It is also described a means ensuring that the recommended daily fiber intake (20-35 grams per day or 10-13 grams per every 1000 calories consumed) is achievable. Such tablets, pills, capsules, ovules, solutions or suspensions, can be formulated to substitute for meals and snacks, especially during the beginning of a weight-loss program.

Importantly from a health point of view, when fiber tablets, pills, capsules, ovules, solutions or suspensions are taken with meals, it helps reduce the consequent rise in blood glucose after eating and enhances satiety.

It is also within the scope of this application that the composition of the present invention be incorporated in a fiber beverage. Research has indicated that soluble fiber, may help support digestive health and that a diet high in soluble fiber (at least 25 grams per day) may help maintain normal cholesterol levels.

### Probiotic

According to one aspect of the present invention the composition is used to prepare a cheese product which is capable of modulating the microbial balance of the gastrointestinal tract after consumption of the cheese product. In other words the composition according to the present invention can be used for the production of cheese products which are characterised with probiotic effect.

For some applications, it is believed that the viable lactic acid micro-organisms in the composition of the present invention can exert a probiotic culture effect in the gastrointestinal tract. Here, a prebiotic is:

*"a non-digestible food ingredient that beneficially affects the host by selectively stimulating the growth and/or the activity of one or a limited number of bacteria in the colon." (Am Clin Nutrit, 2001; 73:406S-409S.).

According to one consensus report (van Loo et al., 1999, Br. J. Nutr., 81: 121-132) the definition for prebiotic is an increase in the number and/or activity of mainly bifidobacteria or lactic acid bacteria in the gastrointestinal tract. Here, it is known that: bifidobacteria may help fight a wide range of harmful and food-poisoning bacteria, including the potentially fatal *E coli* 0157 and *E coli* H88. In addition it is known that bifidobacteria can prevent young children suffering from diarrhoea. *Lactobacillus* GG can be helpful in treating antibiotic-associated diarrhoea while and has also been shown effective at treating some cases of travellers' diarrhoea and rotavirus infection, the most common cause of diarrhoea in children world-wide.

It is also described herein the addition to the composition of the present invention of further probiotic cultures.

The term "probiotic culture" as used herein defines a viable micro-organisms which is capable of beneficially affecting the host organism by improving its intestinal microbial balance. The term "probiotic" as used herein also encompasses viable micro-organisms that can stimulate the beneficial branches of the immune system and at the same time decrease most of the inflammatory reactions in the gut. In this regard, the use of a composition containing said probiotic ingredient for anti-cancer therapy and prevention of allergies and ulcerative colitis is also described.

Whilst there are no lower or upper limits for probiotic intake, it has been suggested that at least 10,000 viable cells per ml of product will give the micro-organism a competitive chance within the gut flora.

In addition, it is also described to provide prebiotics as other compounds which can be included in a combination along with the composition of the present invention. The prebiotic component of the combination comprising the composition of the present invention are characterised with slow fermentation in the large bowel. Such prebiotics can exert a positive effect on the gut flora, specifically in the left side of the colon, an area of the gut which is especially prone to disorders in particular bowel cancer and ulcerative colitis.

### Synbiotic

The present application also describes using both pre- and probiotics as ingredients in a combination along with the composition of the present invention which when combined, become synbiotics.

The purpose of this is to combine the effects of new beneficial bacteria and the stimulation of the body-own beneficial bacteria. There is a high potential in the development and the consumption of such mixtures, since some of these may well show powerful synergistic nutritional effects.

Thus the composition of the present invention may be specifically designed to contain different components which can provide a symbiotics effect to the consumer.

**Pharmaceutical**

The composition of the present invention may be used as - or in the preparation of - a pharmaceutical. Here, the term "pharmaceutical" is used in a broad sense - and covers pharmaceuticals for humans as well as pharmaceuticals for animals (i.e. veterinary applications). In a preferred aspect, the pharmaceutical is for human use and/or for animal husbandry.

The pharmaceutical can be for therapeutic purposes - which may be curative or palliative or preventative in nature. The pharmaceutical may even be for diagnostic purposes.

When used as - or in the preparation of - a pharmaceutical, the composition of the present invention may be used in conjunction with one or more of: a pharmaceutically acceptable carrier, a pharmaceutically acceptable diluent, a pharmaceutically acceptable excipient, a pharmaceutically acceptable adjuvant, a pharmaceutically active ingredient.

The pharmaceutical may be in the from of a solution or as a solid - depending on the use and/or the mode of application and/or the mode of administration.

**Pharmaceutical ingredient**

The composition of the present invention may be used as pharmaceutical ingredients. Here, the composition may be the sole active component or it may be at least one of a number (i.e. 2 or more) active components.

The pharmaceutical ingredient may be in the from of a solution or as a solid - depending on the use and/or the mode of application and/or the mode of administration.

**Forms**

The composition of the present invention may be used in any suitable form - whether when alone or when present in a combination with other components or ingredients. Likewise, combinations comprising the composition of the present invention and other components and/or ingredients (i.e. ingredients - such as food ingredients, pharmaceutical ingredient or functional food ingredients) may be used in any suitable form.

The composition the present invention may be used in the form of solid or liquid preparations or alternatives thereof. Examples of solid preparations include, but are not limited to tablets, capsules, dusts, granules and powders which may be wettable, spray-dried, freeze-dried or lyophilised. Examples of liquid preparations include, but are not limited to, aqueous, organic or aqueous-organic solutions, suspensions and emulsions.

Suitable examples of forms include one or more of: tablets, pills, capsules, ovules, solutions or suspensions, which may contain flavouring or colouring agents, for immediate-, delayed-, modified-, sustained-, pulsed- or controlled-release applications. In regards of controlled-release application it would be possible to regulate for example the addition of the EPS fermentation component of the composition thereby allowing a greater control of the moisture in the cheese curd and the cheese product.

Examples of nutritionally acceptable carriers for use in preparing the forms include, for example, water, salt solutions, alcohol, silicone, waxes, petroleum jelly, vegetable oils, polyethylene glycols, propylene glycol, liposomes, sugars, gelatin, lactose, amylose, magnesium stearate, talc, surfactants, silicic acid, viscous paraffin, perfume oil, fatty acid monoglycerides and diglycerides, petroethral fatty acid esters, hydroxymethyl-cellulose, polyvinylpyrrolidone, and the like.

Preferred excipients for the forms include lactose, sucrose, maltose, starch, a cellulose, milk sugar or high molecular weight polyethylene glycols.

The forms may also include gelatin capsules; fiber capsules, fiber tablets etc.; or even fiber beverages.

The following sample has been deposited in accordance with the Budapest Treaty at the recognised depositary Deutsche Sammlung von Mikroorganismen und Zellkulturen GmbH (DSMZ), on 2 September 2003 (2003-09-02):

DSM 15889 (which is *Lactobacillus sakei* DC 570)

Therefore, more preferred embodiments of the present invention relate to the afore-mentioned product, composition, process and method using or being derivable from said deposit DSM 15889.

**EXAMPLES**

The present invention will now be described by way of examples, and with reference to the accompanying figures:

**Figures**

Figure 1. A schematic representation of a process suitable for making cheese.

Figure 2. A graph representing the pH characteristics of 10% *Streptococcus thermophilus* V3 incubated at 40°C.

Figure 3. A graphic representation showing pH characteristics of 10% *Lactococcus lactis* ssp. *cremoris* Lc 322 incubated at 40°C.

Figure 4. A graphic representation showing pH characteristics of acidification of the medium in the presence of 10% EPS fermentation culture containing *Lactobacillus sakei* 570 incubated at 37°C.

Figure 5. A graphic representation showing pH characteristics of acidification of the medium in the presence of 10% EPS fermentation culture containing *Leuconostoc mesenteroides* 808 incubated at 37°C.

Figure 6. A schematic representing showing a relative whey separation.

Figure 7. A graph representing a syneresis study involving *Lactococcus lactis* ssp. *cremoris* Lc 322.

Figure 8. A graph representing syneresis using EPS fermentation culture containing *Lactobacillus sakei* 570.

Figure 9. A graph providing a summary of the pH characteristics of the acidification and syneresis experiments using 10% thermised EPS fermentation culture containing *Lactococcus lactis* ssp. *cremoris* Lc 322.

Figure 10. A graph providing a summary of the pH characteristics of the acidification and syneresis experiments using 10% thermised EPS fermentation culture containing *Lactobacillus sakei 570.*

Figure 11. A graph representing a summary of pH acidification experiments and syneresis experiments.

Figure 12. Production chart for low fat cheese produced with Lb. Sakei

Figure 13. Schematic diagram of cheese making procedure

Figure 14. Results from sensory evaluation of low fat cheeses

Table 1: Variations for trials for the examination of the pH course of an EPS forming strain at different temperatures.

Table 2. Showing pH characteristics of *Streptococcus thermophilus* V3.

Table 3. Showing pH characteristics of *Lactococcus lactis* ssp. *cremoris* Lc 322.

Table 4. Showing pH characteristics of *Lactobacillus sakei* 570.

Table 5. Showing pH characteristics of *Leuconostoc mesenteroides* 808.

**Materials and Methods**

A list of the bacteria used in the experiments.

- Control acidification strain: *Streptococcus thermophilus* TS-H 100 (K) (SC non-EPS forming, thermophilic strain)

- EPS-producing microbial strains which form part of the EPS fermentation culture: Hetero-EPS-forming strains such as *Streptococcus thermophilus* V3 (Sc)

(thermophilic), *Lactococcus lactis* ssp. *cremoris* Lc 322 (Lc) (mesophilic) and other hetero-EPS forming lactic acid bacterial strains may be used as described herein.

Homo-EPS-forming strains such as: *Lactobacillus sakei* Lb 570 (Lb) (mesophilic) or *Leuconostoc mesenteroides* Ln 808 (Ln) (mesophilic) have been used as typical homo-EPS forming lactic acid bacterial strains although other homo-EPS forming strains may also be used as described herein.

**Example 1.**

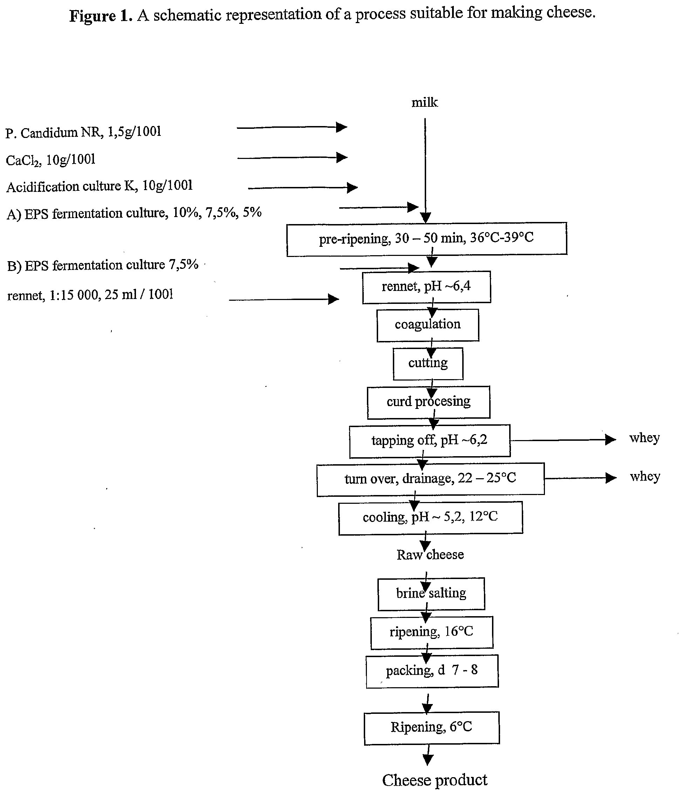

There is provided a schematic representation of an example of a process that may be followed in order to produce a soft cheese product (see Figure 1). The acidification of the medium suitable for forming cheese may be acidified by starter acidification lactic acid bacteria that are well known by persons of skill in the art.

**Example 2.**

**1. Methodology for detecting pH courses in milk.**

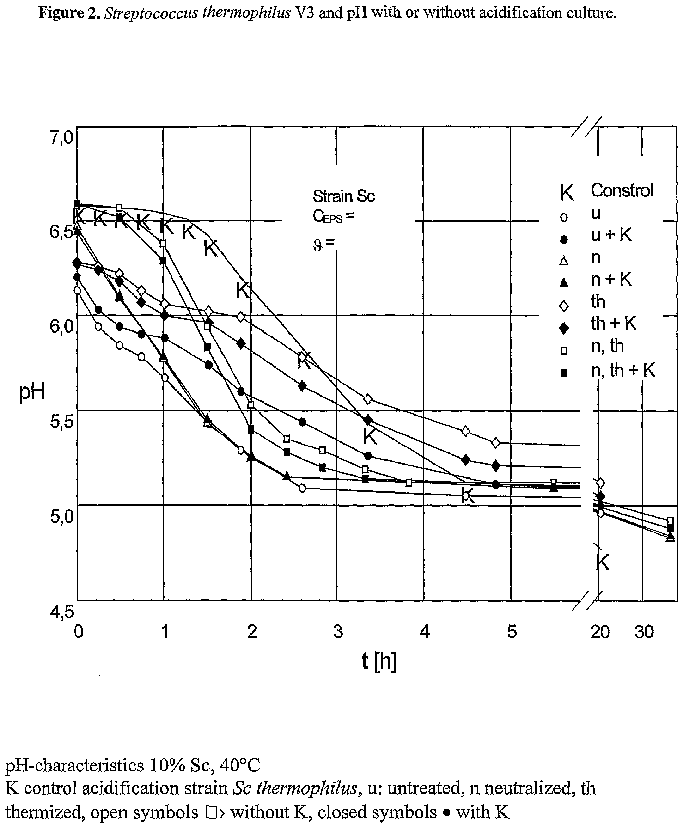

The described methodology was applied for all examined strains according to Figure 2, Figure 3, Figure 4 and Figure 5. The objective was to detect the acidification courses in milk used for cheese-making at temperatures of 34°C and/or 37°C and/or 40°C.

**Step 1:** Production of an EPS fermentation culture.

All fermentation media were inoculated with 1% of the activated culture, i.e. 1 ml culture/100 ml medium. The strains Sc and Lc were cultivated in VIS-START 10 supplied by Danisco Germany , Niebüll. The strains Lb and Ln were cultivated in VIS-START 10 plus 10% saccharose (w/v). The concentration was obtained by adding 20 ml of saccharose solution (50%) to 80 ml concentrated VIS-START 10. The mesophilic strains Lc, Lb and Ln were incubated at 30°C the thermophilic strain Sc was incubated at 39°C. The fermentation time was 4 h for Sc and 48 h for Lb and Ln. Sc was cooled in iced water after fermentation and stored in the refrigerator until its use the following day for stopping culture growth. The time of fermentation may be from about 9 hours to 16h±1h.

Additionally, or in the alternative part of the EPS fermentation cultures were heated to 65°C for 20 seconds after fermentation (while stirring in a water bath at 80°C). This step is referred to as thermising or heating.

Additionally, or in the alternative part of the untreated and part of the heated (thermised) medium was neutralised to pH 6.7 using 2 M $Ca(OH)_2$ solution.

The fermented EPS containing media were thus available in an untreated, neutralized, heated (thermised) as well as neutralised plus heated form.

Consequently, Table 1 shows the variations for temperature and strain which were available for trials.

**Table 1:**

| Trial | + reference acidifying strain | EPS rate [%] | heated | neutralised |
|---|---|---|---|---|
| 1 /2/3 | | 10/ 7,5/ 5 | | |
| 4/5/6 | | 10/ 7,5/ 5 | | x |
| 7/8/9 | x | 10/ 7,5/ 5 | | |
| 10/11/12 | x | 10/ 7,5/ 5 | | x |
| 13/14/15 | x | 10/ 7,5/ 5 | x | |
| 16/17/18 | x | 10/ 7,5/ 5 | x | x |
| 19/20/21 | | 10/ 7,5/ 5 | x | |
| 22/23/24 | | 10/ 7,5/ 5 | x | x |
| 25 | x | - | | |

Step 2: Fermentation of milk

As usual for cheese-making, $CaCl_2$ in the concentration of 10 g $CaCl_2$ / 100 l was added to the milk. The milk was heated to trial temperature and weighed in: 72 g, 74 g respectively 76 g.

Additionally, the EPS fermentation culture were weighed in 8 g (10%), 6 g (7,5%), respectively 4 g, (5%) and added to the milk, so that the total was always 80 g.

As a reference, 80 g milk which had just been inoculated with a reference acidification strain (SC without EPS formation) was used. The mixtures were shaken in a pre-heated water bath with integrated shaker at approx. 45 rev,/min. The pH was measured at the time t=0 and the measurement was repeated every 20 to 30 min. As soon as a mixture had reached pH 6.2 (pH at filling in the simulated cheese-making process), the respective sample was removed from the water bath and subject to further fermentation at room temperature. At pH 5,1 $\pm$ 0,5, the mixtures were transferred to a cooling room with 12°C (simulation of cheese-making process). The next morning, the pH values were measured again.

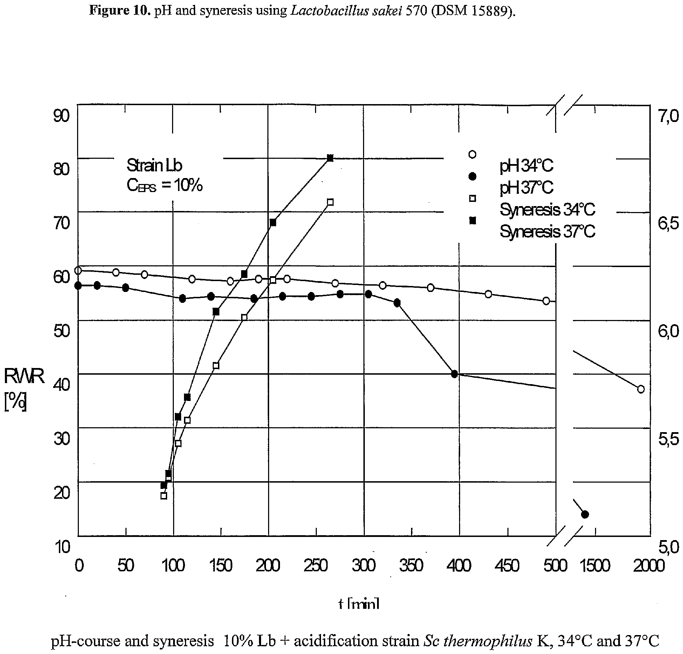

The effect of the thermophilic *Streptococcus thermophilus* V3 strain on the acidification of medium in the presence or absence of the starter acidification culture *Streptococcus thermophilus* TS-H 100 was tested. As shown in Figure 2, 10% of untreated *Streptococcus thermophilus* V3, 10% of thermised *Streptococcus thermophilus* V3, 10% of neutralised *Streptococcus thermophilus* V3 as well as 10% of thermised and neurtalised *Streptococcus thermophilus* V3 were able to acidify the medium to a pH of between 5.3 and 4.6 albeit not as rapidly as the starter acidification culture comprising *Streptococcus thermophilus* TS-H 100 strain on its own. The cultures were incubated at 40° C for up to 30 hours. The acidity of the medium dropped to about pH 5.1 at approximately 2.5 to 3.5 hours after inoculation (see Figure 2).

The data presented on Table 2 shows that *Streptococcus thermophilus* V3 is unable to stop blocking inhibition of the acidification by the starter culture and delays the acidification by about 1.5 hours. Thus indicating that *Streptococcus thermophilus* V3 strain may be a potentially suitable bacterium for use in the cheese making process described herein.

**Table 2.**

| EPS-containing medium | reaction |
|---|---|
| untreated | very fast acidification |
| neutralised | delay of acidification about 20 - 30 min |
| thermised | delay of acidification about 1 h |
| neutralised + thermised | delay of acidification about ca. 1 ½ h |

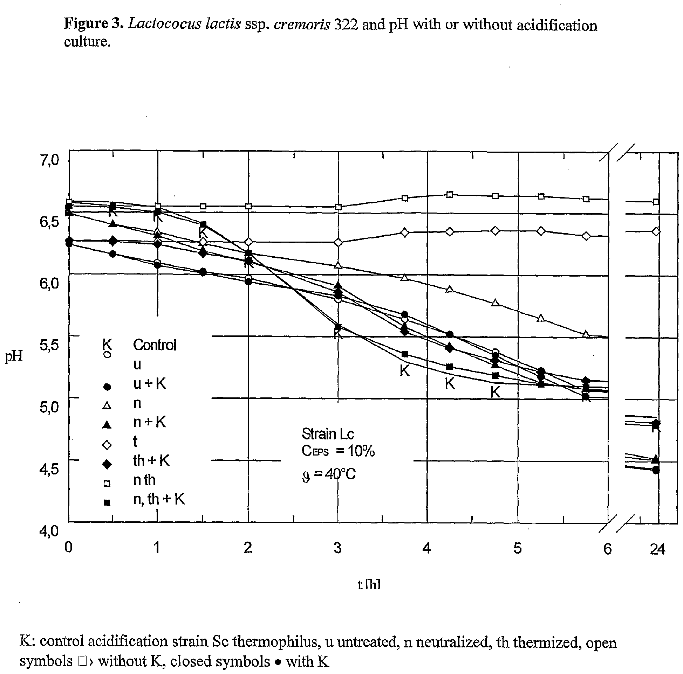

The effect of the mesophilic *Lactococcus lactis* ssp. *cremoris* Lc 322 strain on the acidification of medium in the presence or absence of the starter acidification culture *Streprococcus thermophilus* TS-H 100 was tested. As shown in Figure 3, 10% of untreated *Lactococcus lactis* ssp. *cremoris* Lc 322, 10% of thermised *Lactococcus lactis* ssp. *cremoris* Lc 322, 10% of neutralised *Lactococcus lactis* ssp. *cremoris* Lc 322 as well as 10% of thermised and neurtalised *Lactococcus lactis* ssp. *cremoris* Lc 322 were able to acidify the medium to a pH of between 5.3 and 4.6 albeit not as rapidly as the starter acidification culture comprising *Streprococcus thermophilus* TS-H 100 strain on its own. The cultures were incubated at 40° C for up to 30 hours. The acidity of the medium dropped to about pH 5.1 at approximately 4.5 to 6 hours after inoculation (see Figure 3).

The data presented on Table 3 shows that *Lactococcus lactis* ssp. *cremoris* Lc 322 is able to stop the inhibition of the acidification by the starter culture. Thus indicating that *Lactococcus lactis* ssp. *cremoris* Lc 322 strain may be a suitable bacterium for use in the modified cheese making process described herein.

**Table 3.**

| EPS-containing medium | reaction |
|---|---|
| untreated / + K | acidification lower than K on pH 4,31 - 4,74 |
| neutralised/ + K | delay of acidification |
| thermised + K | no acidification, similar to K |
| neutralized and thermised +K | no acidification like K |

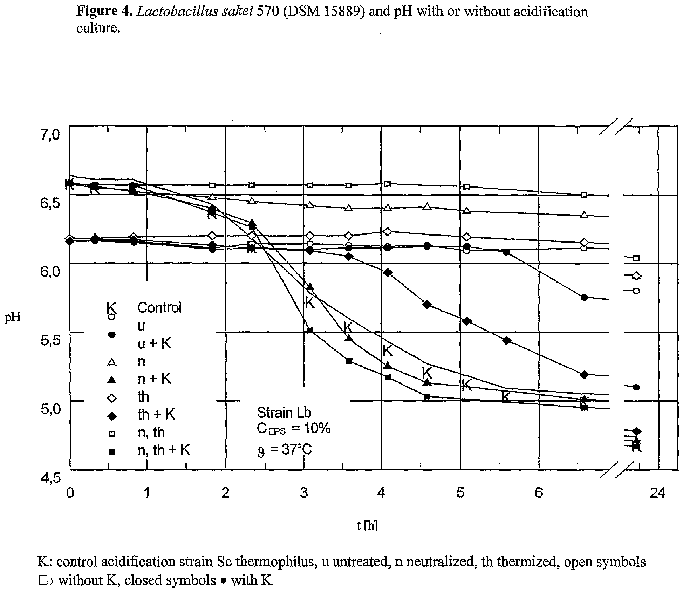

The effect of the mesophilic *Lactobacillus sakei* Lb 570 strain on the acidification of a medium in the presence or absence of the starter acidification culture *Streptococcus thermophilus* TS-H 100 was tested. As shown in Figure 4, 10% of thermised *Lactobacillus sakei* Lb 570 viable lactic acid bacterium as well as 10% of thermised and neurtalised *Lactobacillus sakei* Lb 570 lactic acid bacterium were able to acidify the medium to a pH of between 5.5 and 4.6 as rapidly as the starter acidification culture comprising *Strpetoococcus thermophilus* TS-H 100 strain on its own. The cultures were incubated at 37 degrees for up to 24 hours. The acidity of the medium dropped to about pH 5.0 at approximately 4.5 hours after inoculation (see Figure 4).

Using the same incubation conditions, untreated *Lactobacillus sakei* 570 strain was incubated with or without the starter acidification culture *Streptococcus thermophilus* TS-H 100. The untreated *Lactobacillus sakei* 570 strain delayed the acidification of the medium (see Figure 4).

The data presented on Table 4 shows that neutralised and thermised *Lactobacillus sakei* 570 is capable of abolishing blocking of the acidification and also contributes for a faster acidification of the medium. Indicating that *Lactobacillus sakei* 570 strain is a suitable bacterium for use in cheese making. Thus by using this strain it may be possible to reduce the time of the acidification and thus potentially increase the output during cheese manufacturing.

**Table 4.**

| EPS-containing medium | Reaction |
|---|---|
| untreated | minimal: 0,1- 0,5 pH blocks K $\rightarrow$ slower acidification |
| neutralised + K | 0,1 - 0,7 pH abolishes blocking on K , faster acidification than K, acidification at 13°C to pH 4,6-4,7 |
| thermised + K | 34 / 37°C: 0,3 - 0,4 pH, 40°C: - abolishes blocking on K a little |
| neutralised + thermised + K | 34°C / 37°C: 0,4 - 0,6 pH, 40°C: - Blocking is abolished, faster acidification |

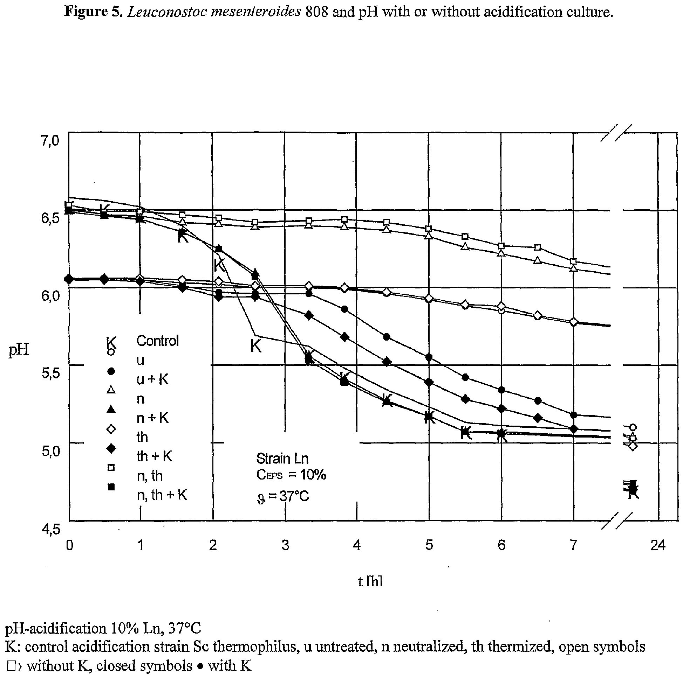

The effect of *Leuconostoc mesenteroides Ln* 808 strain on the acidification of a medium in the presence or absence of the starter acidification culture *Streprococcus thermophilus* TS-H 100 was tested. As shown in Figure 5, 10% of thermised *Leuconostoc mesenteroides Ln* 808 viable lactic acid bacterium as well as 10% of thermised and neutralised *Leuconostoc mesenteroides Ln* 808 lactic acid bacterium were able to acidify the medium to a pH of about 5.0 as rapidly as the starter acidification culture comprising *Stretorococcus thermophilus* TS-H 100 strain on its own. The cultures were incubated at 37 degrees for up to 24 hours. The acidity of the medium dropped to about pH 5.0 at approximately 5.5 hours after inoculation (see Figure 5).

Using the same incubation conditions, untreated mesophilic *Leuconostoc mesenteroides Ln* 808 strain was incubated with or without the starter acidification culture *Streprococcus thermophilus* TS-H 100. The untreated *Leuconostoc mesenteroides Ln* 808 strain delayed the acidification of the medium (see Figure 5).

The data presented on Table 5 shows that neutralised and thermised *Leuconostoc mesenteroides Ln* 808 is capable of abolishing inhibition of the acidification and also contributes for a faster acidification of the medium. Indicating that *Leuconostoc mesenteroides Ln* 808 strain may be a suitable bacterium for use in cheese making as described herein. Thus by using this strain it may be possible to reduce the time of the acidification and thus potentially increase the output during cheese manufacturing.

**Table 5.**

| EPS-containing medium | Reaction |
|---|---|
| untreated + K | acisification: 34°C 0,4 pH; blocks K, slower uncomplete acidification |
| neutralised + K | acidification 34°C 0,5 - 0,7 pH; no blocking of K, faster acidification characteristic |
| thermised + K | acidification 34°C: 0,1- 0,2; slower than untreated, partly reversal of blocking of K |
| neutralised + thermised +K | like thermised, faster than K |

**Example 2**

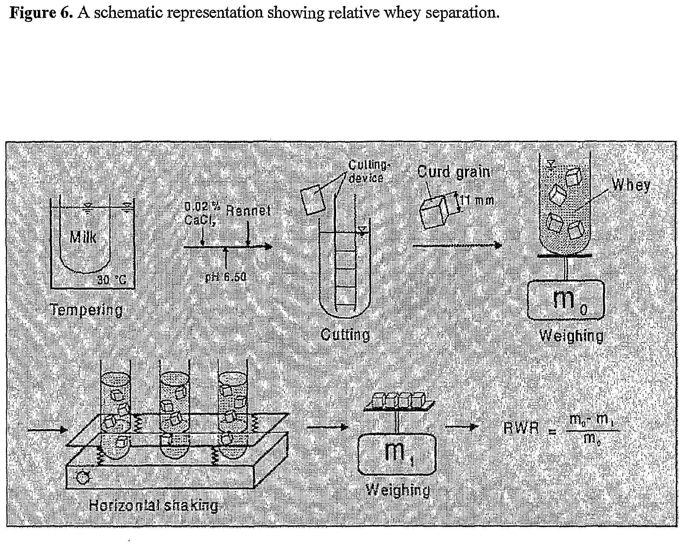

**2. Methodology for detecting syneresis** (see Figure 6).

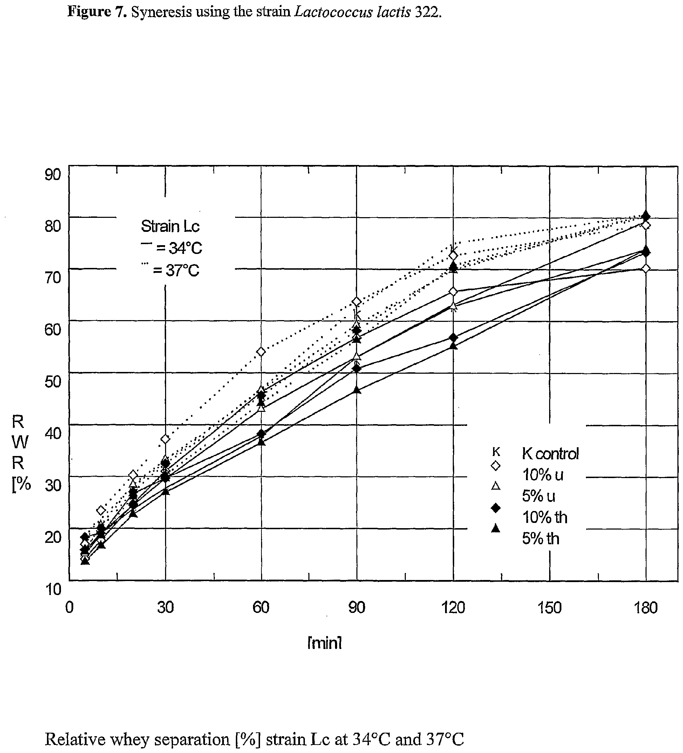

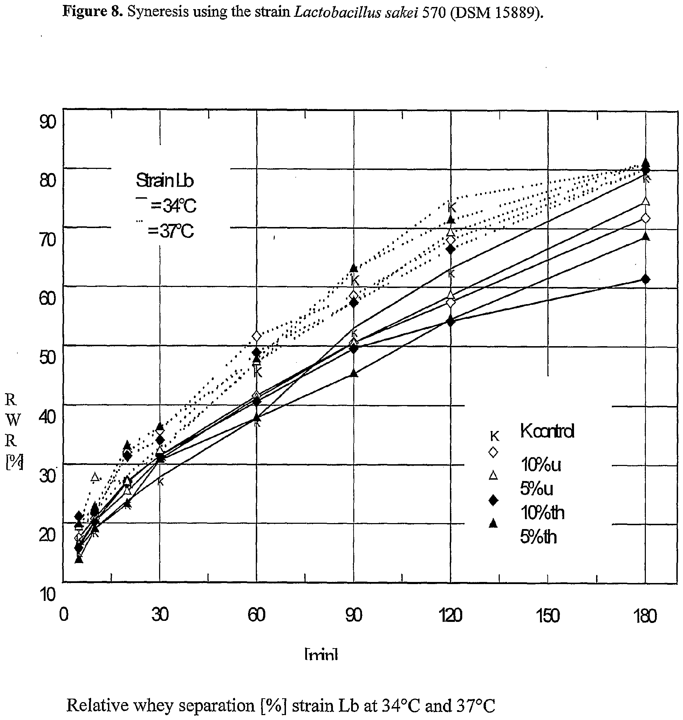

This methodology was applied for the experiments the results from which are presented in Figure 7 and Figure 8.

It was the objective to study the course of syneresis in milk used for cheese-making at temperatures of 34°C and/or 37°C. The syneresis trials were carried out for the strains Lb and Lc at 34°C and 37°C. $C_{EPS}$ was 5% and 10%, the culture was added either without being subject to preliminary treatment or after heating.

For the examinations, the dynamic model system according to Huber *et al.*, (2001) was applied (Huber, P., Fertsch, B., Schreiber, R. & Hinrichs, J. 2001, Dynamic model system to study the kinetics of thermally-induced syneresis of cheese curd grains. Milk Science Interhational 56 (10): 459-552).

However, for simulating the production of soft cheese, the above method was slightly modified as follows:

- The drained whey was placed in test tubes containing 25 ml reconstituted sweet whey each. The tubes were placed in a pre-heated incubation shaker (Modell C 25, New Brunswick Scientific Co., Inc., Edison, New Jersey, U.S.A.).
- The milk (for cheese-making) was pre-fermented in 100-ml-scale and coagulated. For this purpose, 100 μl CaCl₂ solution was filled into each glass, the prepared EPS containing fermentation culture was weighed in. The milk was pre-heated to the desired temperature and weighed in, too. After addition of 100μl reference acidification culture / 100 g milk, 1 min stirring. Afterwards, pre-ripening for 60 min in the water bath at the respective temperature. After pre-ripening, rennet was added (1:20, w/v) with a concentration of 20 ml/100 l milk (corresponds to 400μl diluted rennet / 100 g milk). After addition of rennet, 1 min stirring and further heating in the water bath until the time for cutting.
- The coagulated gel was cut into cubes of 22 mm (corresponding to soft cheese) with a special tool. One cube each was placed in the glasses with pre-heated sweet whey and shaken at 200 rev./min at the respective temperature. The net weight $m_0$ of the cube was calculated. Shaking times were 5, 10, 20, 30, 60, 90, 120 and 180 min. After the respective shaking time, the test tube was removed from the shaker and the whey was poured out through an extra-fine sieve. The weight of the shaken cube $m_t$ after the shaking time t was measured. The relative whey release (RWR) in % was calculated by means of the following formula:

$$RWR = \frac{m_0 - m_t}{m_0} x100 \qquad (0.1)$$

A schematic representation of the methodology used to determine the relative whey separation is represented in Figure 6.

**Example 3**

**3. Co-ordination of the pH courses and the syneresis experiments.**

The objective was to represent the experimental courses of pH and syneresis in time, as they run simultaneously while making the cheeses, in order to deduct an appropriate technology.

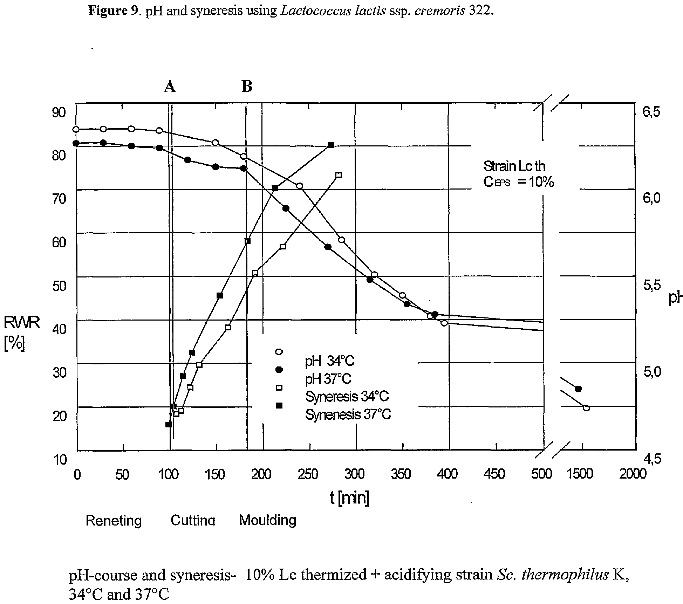

Lines A and B in Figure 9 refer to cheese at a temperature of 37°C. The pH line refers to the pH course as determined by means of the method described in Example 1 and represented in Figure 3 and Figure 4. The syneresis curve was determined according to the method described in Example 2 and represented in Figures 7 and 8.

The space bracketed between lines A and B in Figure 9 represents a shift in time that can be explained by transferring the data from Figure 10.

Thus, first, the pre-ripening time is 60 min. Additionally there is the gel formation until cutting. The cutting time was calculated from the measured gelling point (oscillatory measurement). Calculation of cutting time = time until gelling point x 4.

By way of an illustrating example: after approx. 10 to 12 min after addition of rennet, the gel formation starts = gelling point. This time multiplied by 4 equals 40 to 48 min. In total, this means 60 min pre-ripening plus time until cutting 40 min = 100 min. 100 min corresponds to the shift of the RWR curve in Figure 9 that is bracketed between lines A and B.

**Example 4**

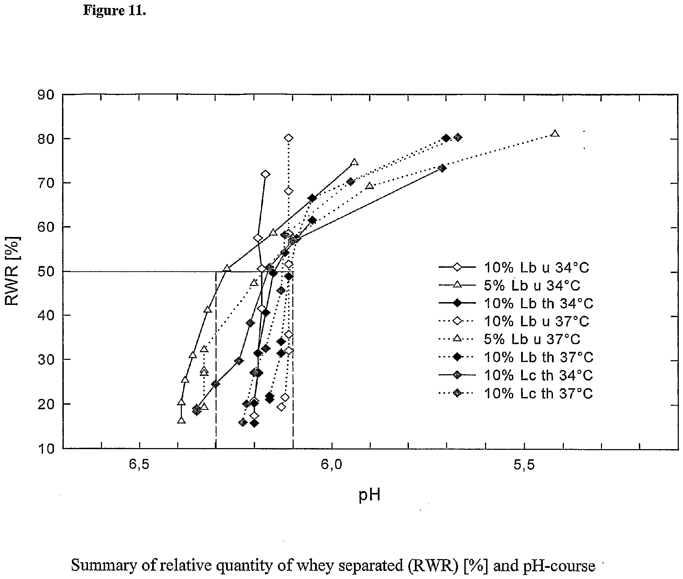

**4. Presentation of the results according to Figure 11.**

We consider the RWR and the pH values as shown in Figure 9 at a certain time. That means, we obtain values for the data (t/pH/RWR) e. g. for Figure 9, 37°C: t=100min, pH ~ 6.2, RWR ~ 18%. Now the corresponding RWR values for a certain time are presented depending on the pH.

We obtain the presentation given in Figure 11. It shows the representation of the pH and the curd grain syneresis during the process of cheese-making in the model experiments for the modified process. Depending on the time as shown in Figure 9 or Figure 10 the co-ordinate values for RWR and pH can be read.

For the production of soft cheese, the following instructions must be respected: when the curd is filled, the RWR must be about 50% and the pH must be 6.1 to 6.3.

**Example 5**

**Low fat cheese with exopolysaccharides from *Lb. Sakei***

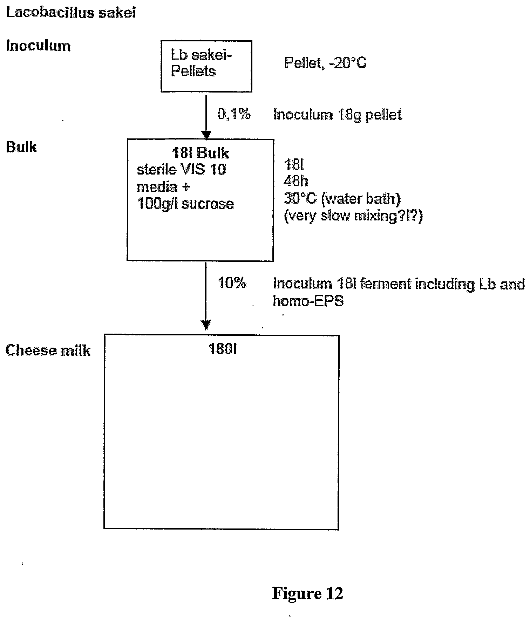

Low fat cheese with 6% cheese was produced in 180 L pilot scale with a *Lactobacillus Sakei* culture. The *Lactobacillus Sakei* preferment was prepared according to the flow chart below (Figure 12). The goal of the experiments is to develop a 6% fat cheese which has a similar texure/sensory properties as a 30+ cheese (17% fat) concerning rubbery and solubility properties.

Cheese production.

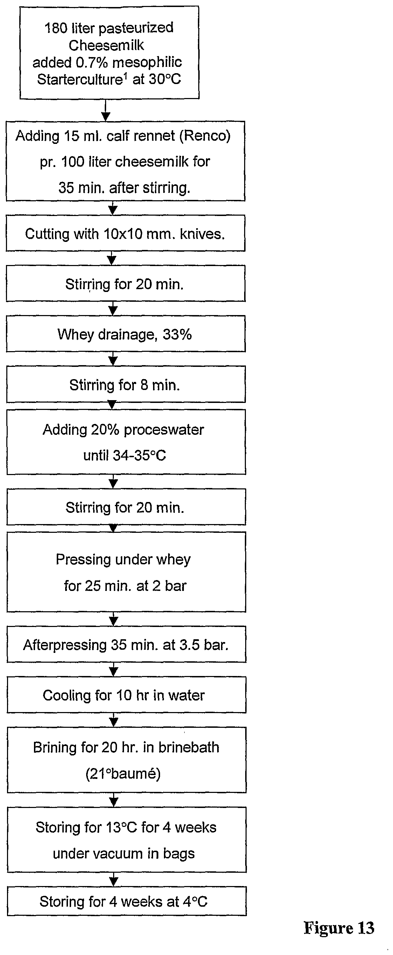

Low fat cheese was produced according to the flowchart in Figure 13.

The mesophilic starter is an Aria Foods Culture produced by Danisco A/S.

The project-group (9 persons) which is an untrained panel, tasted the cheeses blind (with a letter code). The cheeses were four weeks old and stored for 24 hours at 13°C before serving. The serving order was randomised and all the cheeses were evaluated by using 6 descriptors:

Consistency - *hardness* and *elasticity*
Mouths feel - *hardness, sticky, soluble* and *rubbery.*

The panel leader (chairman) marked the cheeses on a line scale if all in the project-group agreed on the intensity of a perceived descriptor. The line scale had anger point from "little" to "much". One cheese was evaluated at the time, regarding to the 6 descriptors.

Sample codes are:

• A: Commercial cheese "Danbo" 30+ (Hjørring Dairy, ArlaFoods, Denmark)

- D: 6% fat cheese with 2.5% Lb. Sakei pre-ferment
- H: 6% fat cheese with 1% Lb. Sakei pre-ferment
- K: 6% fat cheese without additions

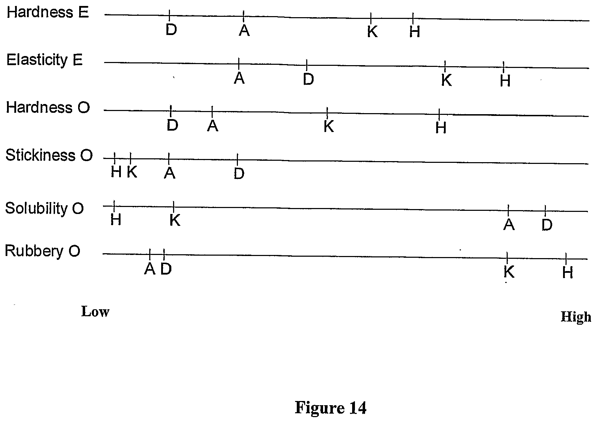

Figure 14 shows the results from sensory evaluation of low fat cheeses

The cheeses were evaluated by sensory analysis after 5 weeks storage. The sensory profiling shows that the 6% fat cheese with 2.5% *Lb. Sakei* pre-ferment resembles the 30+ Danbo cheese more than it resembles the 6% fat cheese without additions. In contrast the cheese with only 1% *Lb. Sakei* pre-ferment highly resembles the 6% fat control cheese in sensory profile.

Especially the solubility of the 6% fat cheese was improved significantly in the cheese added *2.5% Lb. Sakei* pre-ferment compared to the untreated 6% fat cheese. Accordingly, the cheese with 2.5% *Lb. Sakei* pre-ferment will be perceived as much more soluble (less crumbly) in the mouth as compared to the untreated 6% fat cheese. Furthermore, the addition of 2.5% *Lb. Sakei* pre-ferment significantly reduced rubberyness of the 6% fat cheese. Rubberyness of the 6% fat cheese with 2.5% *Lb. Sakei* pre-ferment was reduced to a level comparable with the commercial 30+ Danbo cheese.

According to the above results it is clear that addition of *Lb. Sakei* pre-ferment considerably improved the texture of low fact cheese, resulting in a less rubbery and more soluble cheese. Each of the applications and patents mentioned in this document, and each document cited or referenced in each of the above applications and patents, including during the prosecution of each of the applications and patents ("application cited documents") and any manufacturer's instructions or catalogues for any products cited or mentioned in each of the applications and patents and in any of the application cited documents, are hereby incorporated herein by reference. Furthermore, all documents cited in this text, and all documents cited or referenced in documents cited in this text, and any manufacturer's instructions or catalogues for any products cited or mentioned in this text, are hereby incorporated herein by reference.

## Claims

1. A composition suitable for forming cheese, said composition comprising a starter acidification culture and an exopolysaccharide (EPS) fermentation culture wherein said EPS fermentation culture contains a viable micro-organism selected from the group consisting of *Streptococcus thermophilus* V3, *Lactococcus lactis* ssp *cremoris* 332, *Lactobacillus Sakei* 570 deposited as DSM 15889 at the Deutsche Sammlung von Mikrooraganismen und Zellkulturen GmbH, and *Leuconostoc mesenteroides* 808, wherein said micro-organism is capable of producing an enzyme, and wherein said enzyme is capable of producing an EPS.

2. The composition according to claim 1, wherein said EPS fermentation culture contains a viable micro-organism selected from the group consisting of *Streptococcus thermophilus* V3 and *Lactococcus lactis* ssp *cremoris* 332, and the EPS is a hetero-EPS.

3. The composition according to claim 1, wherein said EPS fermentation culture contains a viable micro-organism selected from the group consisting of *Lactobacillus sakei* 570 deposited as DSM 15889 at the Deutsche Sammlung von Mikrooraganismen und Zellkulturen GmbH and *Leuconostoc mesenteroides* 808, and the EPS is a homo-EPS.

4. The composition according to any one of claims 1 to 3 wherein the starter acidification culture comprises a micro-organism that is capable of fermenting lactic acid.

5. The composition according to claim 4 wherein said starter acidification culture is a culture of a lactic acid bacterium.

6. Use of a composition according to any one of claims 1 to 5 to prepare a cheese product; wherein the viable micro-organism of said composition has produced an enzyme and wherein said enzyme has produced an EPS.

7. Use according to claim 6 wherein said EPS production occurs separately from acidification by said starter acidification culture.

8. Use according to claim 7 wherein the EPS is produced *in situ.*

9. Use according to claim 9 wherein said EPS is produced in the presence of a suitable enzyme substrate selected from the group consisting of sucrose, fructose, glucose, maltose, lactose, stacchyose, raffinose and verbascose.

10. Use according to any one of claims 6 to 9 wherein the cheese product is a soft cheese product.

11. Use according to claim 10 wherein said EPS is capable of modulating the moisture level of said product.

12. Use according to claim 10 wherein the target moisture is capable of being achieved by optimising whey release during curd processing.

13. Use according to claim 12 wherein said EPS increases the stability and/or elasticity of said curd.

14. Use according to claim 13 wherein the curd exhibits greater resilience to physical manipulations.

15. Use according to claim 14 wherein said curd is capable of being manipulated with conventional curd manipulating equipment.

16. Use according to any one of claims 6 to 15 wherein said EPS is capable of forming a cheese curd containing about 50% moisture level.

17. Use according to claim 16, wherein said curd has less than 5% loss in moisture during ripening to a cheese product.

18. Use according to any one of claims 6 to 17 wherein said EPS is capable of improving at least one of the texture, aroma, flavour, mildness, consistency, body, mouth feel, firmness, viscosity, gel fracture, wheying off, syneresis, structure and/or organoleptic properties, nutrition and/or health benefits of the cheese product.

19. Use according to claim 6 wherein said composition is admixed with a medium suitable for forming cheese so as to form a cheese curd containing about 50% moisture and wherein during ripening of the cheese product less than about 5% moisture is lost.

20. A cheese product comprising the composition according to any one of claims 1 to 5.

21. A cheese product according to claim 20 wherein the cheese product is a soft cheese product.

22. Use of a composition according to any one of claims 1 to 5 or a cheese product according to claim 20 or 21 to improve the microbial balance of the gastrointestinal tract after consumption; wherein the micro-organism of said composition or of said cheese product comprising said composition has produced an enzyme and wherein said enzyme has produced an EPS.

23. A process for *in situ* production of an EPS comprising the steps of:

> - providing a composition according to any one of claims 1 to 5,
> - permitting growth of said micro-organism so as to produce the EPS, and
> - optionally isolating said EPS.

24. The process according to claim 23 wherein said EPS is a homo-EPS.

25. The process according to claim 23 or claim 24 wherein the micro-organism is *Lactobacillus sakei* 570 deposited as DSM 15889 at the Deutsche Sammlung von Mikroorganismen und Zellkulturen GmbH.

26. Use of EPS produced by the process of any one of claims 23 to 25 or a composition according to any one of claims 1 to 5 in the manufacture of a cheese product wherein said EPS or composition is capable of improving at least one of the texture, aroma, flavour, mildness, consistency, body, mouth feel, firmness, viscosity, gel fracture, wheying off, syneresis, structure and/or organoleptic properties, nutrition and/or health benefits of the cheese product; or said EPS or composition is capable of modulating the moisture content of the cheese product; or said EPS or composition is capable of modulating the texture of a cheese product.

27. Use according to claim 26 wherein said EPS or composition is capable of improving the texture of a low fat cheese product.

28. *Lactobacillus sakei* strain 570 deposited as DSM 15889 at the Deutsche Sammlung von Mikroorganismen und Zellkulturen GmbH.

**Patentansprüche**

1. Zusammensetzung, geeignet zum Herstellen von Käse, wobei die Zusammensetzung eine Starter-Säuerungskultur und eine Exopolysaccharid(EPS)-Fermentationskultur umfasst, wobei die EPS-Fermentationskultur einen lebensfähigen Mikroorganismus ausgewählt aus der Gruppe bestehend aus *Streptococcus thermophilus* V3, *Lactococcus lactis* ssp *cremoris* 332, *Lactobacillus sakei* 570, hinterlegt als DSM 15889 bei der Deutsche Sammlung von Mikroorganismen und Zellkulturen GmbH, und *Leuconostoc mesenteroides* 808 enthält, wobei der Mikroorganismus fähig ist, ein Enzym zu erzeugen, und wobei das Enzym fähig ist, ein EPS zu erzeugen.

2. Zusammensetzung gemäß Anspruch 1, wobei die EPS-Fermentationskultur einen lebensfähigen Mikroorganismus ausgewählt aus der Gruppe bestehend aus *Streptococcus thermophilus* V3 und *Lactococcus lactis* ssp *cremoris* 332 enthält und das EPS ein Hetero-EPS ist.

3. Zusammensetzung gemäß Anspruch 1, wobei die EPS-Fermentationskultur einen lebensfähigen Mikroorganismus ausgewählt aus der Gruppe bestehend aus *Lactobacillus sakei* 570, hinterlegt als DSM 15889 bei der Deutsche Sammlung von Mikroorganismen und Zellkulturen GmbH, und *Leuconostoc mesenteroides* 808 enthält und das EPS ein Homo-EPS ist.

4. Zusammensetzung gemäß einem der Ansprüche 1 bis 3, wobei die Starter-Säuerungskultur einen Mikroorganismus umfasst, der fähig ist, Milchsäure zu fermentieren.

5. Zusammensetzung gemäß Anspruch 4, wobei die Starter-Säuerungskultur eine Kultur eines Milchsäurebakteriums ist.

6. Verwendung einer Zusammensetzung gemäß einem der Ansprüche 1 bis 5 zum Herstellen eines Käseprodukts; wobei der lebensfähige Mikroorganismus der Zusammensetzung ein Enzym erzeugt hat und wobei das Enzym ein EPS erzeugt hat.

7. Verwendung gemäß Anspruch 6, wobei die EPS-Erzeugung getrennt von der Säuerung durch die Starter-Säuerungskultur erfolgt.

8. Verwendung gemäß Anspruch 7, wobei das EPS *in situ* erzeugt wird.

9. Verwendung gemäß Anspruch 9, wobei das EPS in Gegenwart eines geeigneten Enzymsubstrats ausgewählt aus der Gruppe bestehend aus Saccharose, Fructose, Glucose, Maltose, Lactose, Stacchyose, Raffinose und Verbascose erzeugt wird.

10. Verwendung gemäß einem der Ansprüche 6 bis 9, wobei das Käseprodukt ein Weichkäseprodukt ist.

11. Verwendung gemäß Anspruch 10, wobei das EPS fähig ist, den Feuchtegehalt des Produkts zu modulieren.

12. Verwendung gemäß Anspruch 10, wobei die Zielfeuchte fähig ist, durch Optimieren der Molkefreisetzung während der Käsebruchverarbeitung erzielt zu werden.

13. Verwendung gemäß Anspruch 12, wobei das EPS die Stabilität und/oder die Elastizität des Käsebruchs erhöht.

14. Verwendung gemäß Anspruch 13, wobei der Käsebruch eine größere Widerstandsfähigkeit gegen physische Manipulationen aufweist.

15. Verwendung gemäß Anspruch 14, wobei der Käsebruch fähig ist, mit herkömmlichen Käsebruch-Manipulationsvorrichtungen manipuliert zu werden.

16. Verwendung gemäß einem der Ansprüche 6 bis 15, wobei das EPS fähig ist, einen Käsebruch zu bilden, der einen Feuchtegrad von etwa 50 % enthält.

17. Verwendung gemäß Anspruch 16, wobei der Käsebruch während des Reifens zu einem Käseprodukt einen Verlust an Feuchte von weniger als 5 % aufweist.

**18.** Verwendung gemäß einem der Ansprüche 6 bis 17, wobei das EPS fähig ist, wenigstens eines von der Textur, dem Aroma, dem Geschmack, der Milde, der Konsistenz, dem Körper, dem Mundgefühl, der Festigkeit, der Viskosität, dem Gel-Bruch, dem Entmolken, der Synärese, der Struktur und/oder von organoleptischen Eigenschaften, Ernährungsund/oder Gesundheitsvorteilen des Käseprodukts zu verbessern.

**19.** Verwendung gemäß Anspruch 6, wobei die Zusammensetzung mit einem Medium gemischt wird, das geeignet ist, Käse zu bilden, um einen Käsebruch zu bilden, der etwa 50 % Feuchte enthält, und wobei während des Reifens des Käseprodukts weniger als etwa 5 % Feuchte verloren wird.

**20.** Käseprodukt, umfassend die Zusammensetzung gemäß einem der Ansprüche 1 bis 5.

**21.** Käseprodukt gemäß Anspruch 20, wobei das Käseprodukt ein Weichkäseprodukt ist.

**22.** Verwendung einer Zusammensetzung gemäß einem der Ansprüche 1 bis 5 oder eines Käseprodukts gemäß Anspruch 20 oder 21 zum Verbessern der mikrobiellen Ausgewogenheit des Magen-Darm-Trakts nach dem Verzehr; wobei der Mikroorganismus der Zusammensetzung oder des Käseprodukts, das die Zusammensetzung umfasst, ein Enzym hergestellt hat und wobei das Enzym ein EPS hergestellt hat.

**23.** Verfahren für die *In-situ*-Herstellung eines EPS, umfassend die Schritte:

- Bereitstellen einer Zusammensetzung gemäß einem der Ansprüche 1 bis 5,
- Erlauben von Wachstum des Mikroorganismus, um das EPS herzustellen, und
- gegebenenfalls Isolieren des EPS.

**24.** Verfahren gemäß Anspruch 23, wobei das EPS Homo-EPS ist.

**25.** Verfahren gemäß Anspruch 23 oder Anspruch 24, wobei der Mikroorganismus *Lactobacillus sakei* 570, hinterlegt als DSM 15889 bei der Deutsche Sammlung von Mikroorganismen und Zellkulturen GmbH, ist.

**26.** Verwendung von EPS, hergestellt durch das Verfahren gemäß einem der Ansprüche 23 bis 25, oder einer Zusammensetzung gemäß einem der Ansprüche 1 bis 5 bei der Herstellung eines Käseprodukts, wobei das EPS oder die Zusammensetzung fähig ist, wenigstens eines von der Textur, dem Aroma, dem Geschmack, der Milde, der Konsistenz, dem Körper, dem Mundgefühl, der Festigkeit, der Viskosität, dem Gel-Bruch, dem Entmolken, der Synärese, der Struktur und/oder von organoleptischen Eigenschaften, Ernährungsund/oder Gesundheitsvorteilen des Käseprodukts zu verbessern; oder das EPS oder die Zusammensetzung fähig ist, den Feuchtegehalt des Käseprodukts zu modulieren; oder das EPS oder die Zusammensetzung fähig ist, die Textur eines Käseprodukts zu modulieren.

**27.** Verwendung gemäß Anspruch 26, wobei das EPS oder die Zusammensetzung fähig ist, die Textur eines fettarmen Käseprodukts zu verbessern.

**28.** *Lactobacillus sakei* Stamm 570, hinterlegt als DSM 15889 bei der Deutsche Sammlung von Mikroorganismen und Zellkulturen GmbH.

**Revendications**

**1.** Composition adaptée pour former un fromage, ladite composition comprenant une culture d'acidification de départ et une culture de fermentation d'exopolysaccharide (EPS) dans laquelle ladite culture de fermentation d'EPS contient un micro-organisme viable choisi dans le groupe constitué de *Streptococcus thermophilus* V3, *Lactocuccus lactis* ssp *cremoris* 332, *Lactobacillus sakei* 570 déposé sous DSM 15889 au Deutsche Sammlung von Mikro oraganismen und Zellkulturen GmbH, et *Leuconostoc mesenteroides* 808, ledit micro-organisme étant capable de produire une enzyme, et ladite enzyme étant capable de produire un EPS.

**2.** Composition selon la revendication 1, ladite culture de fermentation d'EPS contenant un micro-organisme viable choisi dans le groupe constitué de *Streptococcus thermophilus* V3 et *Lactococcus lactis* ssp *cremoris* 332, et l'EPS étant un hétéro-EPS.

**3.** Composition selon la revendication 1, dans laquelle ladite culture de fermentation d'EPS contient un micro-organisme viable choisi dans le groupe constitué de *Lactobacillus sakei* 570 déposé sous DSM 15889 au Deutsche Sammlung von Mikrooraganismen und Zellkulturen GmbH et *Leuconostoc mesenteroides* 808, et l'EPS est un homo-EPS.

4. Composition selon l'une quelconque des revendications 1 à 3 dans laquelle la culture d'acidification de départ comprend un micro-organisme qui est capable de fermenter l'acide lactique.

5. Composition selon la revendication 4 dans laquelle ladite culture d'acidification de départ est une culture d'une bactérie lactique.

6. Utilisation d'une composition selon l'une quelconque des revendications 1 à 5 pour préparer un produit de fromagerie ; dans laquelle le micro-organisme viable de ladite composition a produit une enzyme et dans laquelle ladite enzyme a produit un EPS.

7. Utilisation selon la revendication 6 dans laquelle ladite production d'EPS survient séparément de l'acidification par ladite culture d'acidification de départ.

8. Utilisation selon la revendication 7 dans laquelle l'EPS est produit *in situ.*

9. Utilisation selon la revendication 9 dans laquelle ledit EPS est produit en présence d'un substrat d'enzyme adapté choisi dans le groupe constitué des saccharose, fructose, glucose, maltose, lactose, stacchyose, raffinose et verbascose.

10. Utilisation selon l'une quelconque des revendications 6 à 9 dans laquelle le produit de fromagerie est un produit de fromagerie à pâte molle.

11. Utilisation selon la revendication 10 dans laquelle ledit EPS est capable de moduler le taux d'humidité dudit produit.

12. Utilisation selon la revendication 10 dans laquelle l'humidité cible peut être atteinte par optimisation de la libération de lactosérum pendant le traitement de caillé.

13. Utilisation selon la revendication 12 dans laquelle ledit EPS augmente la stabilité et/ou l'élasticité dudit caillé.

14. Utilisation selon la revendication 13 dans laquelle le caillé présente une plus grande élasticité à des manipulations physiques.

15. Utilisation selon la revendication 14 dans laquelle ledit caillé peut être manipulé avec un équipement de manipulation de caillé conventionnel.

16. Utilisation selon l'une quelconque des revendications 6 à 15 dans laquelle ledit EPS est capable de former un caillé de fromagerie contenant environ 50 % de taux d'humidité.

17. Utilisation selon la revendication 16, dans laquelle ledit caillé présente moins de 5 % de perte d'humidité pendant l'affinage en produit de fromagerie.

18. Utilisation selon l'une quelconque des revendications 6 à 17 dans laquelle ledit EPS est capable d'améliorer au moins l'un parmi la texture, l'arôme, la saveur, la douceur, la consistance, le corps, la sensation en bouche, la fermeté, la viscosité, la fracture de gel, l'exsudation du sérum, la synérèse, la structure et/ou les propriétés organoleptiques, la nutrition et/ou les bénéfices pour la santé du produit de fromagerie.

19. Utilisation selon la revendication 6 dans laquelle ladite composition est mélangée avec un milieu adapté pour former un fromage de manière à former un caillé de fromagerie contenant environ 50 % d'humidité et dans laquelle, pendant l'affinage du produit de fromagerie, moins d'environ 5 % d'humidité est perdu.

20. Produit de fromagerie comprenant la composition selon l'une quelconque des revendications 1 à 5.

21. Produit de fromagerie selon la revendication 20, le produit de fromagerie étant un produit de fromagerie à pâte molle.

22. Utilisation d'une composition selon l'une quelconque des revendications 1 à 5 ou d'un produit de fromagerie selon la revendication 20 ou 21 pour améliorer l'équilibre microbien du tractus gastro-intestinal après consommation ; le micro-organisme de ladite composition ou dudit produit de fromagerie comprenant ladite composition ayant produit une enzyme et ladite enzyme ayant produit un EPS.

23. Procédé de production *in situ* d'un EPS comprenant les étapes de :

- fourniture d'une composition selon l'une quelconque des revendications 1 à 5,
- permettant la croissance dudit micro-organisme de manière à produire l'EPS, et
- facultativement l'isolement dudit EPS.

24. Procédé selon la revendication 23 dans lequel ledit EPS est un homo-EPS.

25. Procédé selon la revendication 23 ou la revendication 24 dans lequel le micro-organisme est *Lactobacillus sakei* 570 déposé sous DSM 15889 au Deutsche Sammlung von Mikroorganismen und Zellkulturen GmbH.

26. Utilisation d'EPS produit par le procédé de l'une quelconque des revendications 23 à 25 ou d'une composition selon l'une quelconque des revendications 1 à 5 dans la fabrication d'un produit de fromagerie dans laquelle ledit EPS ou ladite composition est capable d'améliorer au moins l'un parmi la texture, l'arôme, la saveur, la douceur, la consistance, le corps, la sensation en bouche, la fermeté, la viscosité, la fracture de gel, l'exsudation du sérum, la synérèse, la structure et/ou les propriétés organoleptiques, la nutrition et/ou les bénéfices pour la santé du produit de fromagerie ; ou ledit EPS ou ladite composition est capable de moduler la teneur en humidité du produit de fromagerie ; ou ledit EPS ou ladite composition est capable de moduler la texture d'un produit de fromagerie.

27. Utilisation selon la revendication 26 dans laquelle ledit EPS ou ladite composition est capable d'améliorer la texture d'un produit de fromagerie pauvre en matières grasses.

28. *Lactobacillus sakei* souche 570 déposé sous DSM 15889 au Deutsche Sammlung von Mikroorganismen und Zellkulturen GmbH.

**Figure 1.** A schematic representation of a process suitable for making cheese.

milk

P. Candidum NR, 1,5g/100l

CaCl₂, 10g/100l

Acidification culture K, 10g/100l

A) EPS fermentation culture, 10%, 7,5%, 5%

B) EPS fermentation culture 7,5%

rennet, 1:15 000, 25 ml / 100l

| pre-ripening, 30 – 50 min, 36°C-39°C |

| rennet, pH ~6,4 |

| coagulation |

| cutting |

| curd procesing |

| tapping off, pH ~6,2 | → whey

| turn over, drainage, 22 – 25°C | → whey

| cooling, pH ~ 5,2, 12°C |

Raw cheese

| brine salting |

| ripening, 16°C |

| packing, d 7 - 8 |

| Ripening, 6°C |

Cheese product

**Figure 2.** *Streptococcus thermophilus* V3 and pH with or without acidification culture.

pH-characteristics 10% Sc, 40°C
K control acidification strain *Sc thermophilus*, u: untreated, n neutralized, th thermized, open symbols □> without K, closed symbols • with K

**Figure 3.** *Lactococus lactis* ssp. *cremoris* 322 and pH with or without acidification culture.

t [h]

K: control acidification strain Sc thermophilus, u untreated, n neutralized, th thermized, open symbols □› without K, closed symbols ● with K

**Figure 4.** *Lactobacillus sakei* 570 (DSM 15889) and pH with or without acidification culture.

K: control acidification strain Sc thermophilus, u untreated, n neutralized, th thermized, open symbols □› without K, closed symbols ● with K

**Figure 5.** *Leuconostoc mesenteroides* 808 and pH with or without acidification culture.

pH-acidification 10% Ln, 37°C
K: control acidification strain Sc thermophilus, u untreated, n neutralized, th thermized, open symbols
□› without K, closed symbols • with K

**Figure 6.** A schematic representation showing relative whey separation.

**Figure 7.** Syneresis using the strain *Lactococcus lactis* 322.

Relative whey separation [%] strain Lc at 34°C and 37°C

**Figure 8.** Syneresis using the strain *Lactobacillus sakei* 570 (DSM 15889).

Relative whey separation [%] strain Lb at 34°C and 37°C

**Figure 9.** pH and syneresis using *Lactococcus lactis* ssp. *cremoris* 322.

pH-course and syneresis- 10% Lc thermized + acidifying strain *Sc. thermophilus* K, 34°C and 37°C

**Figure 10.** pH and syneresis using *Lactobacillus sakei* 570 (DSM 15889).

pH-course and syneresis  10% Lb + acidification strain *Sc thermophilus* K, 34°C and 37°C

**Figure 11.**

Summary of relative quantity of whey separated (RWR) [%] and pH-course

Lacobacillus sakei

Inoculum

Lb sakei-
Pellets                    Pellet, -20°C

                    0,1%    Inoculum 18g pellet

Bulk

18l Bulk
sterile VIS 10             18l
media +                    48h
100g/l sucrose             30°C (water bath)
                           (very slow mixing?!?)

                    10%    Inoculum 18l ferment including Lb and
                           homo-EPS

Cheese milk              180l

Figure 12

180 liter pasteurized
Cheesemilk
added 0.7% mesophilic
Starterculture[1] at 30°C

↓

Adding 15 ml. calf rennet (Renco)

pr. 100 liter cheesemilk for

35 min. after stirring.

↓

Cutting with 10x10 mm. knives.

↓

Stirring for 20 min.

↓

Whey drainage, 33%

↓

Stirring for 8 min.

↓

Adding 20% proceswater
until 34-35°C

↓

Stirring for 20 min.

↓

Pressing under whey
for 25 min. at 2 bar

↓

Afterpressing 35 min. at 3.5 bar.

↓

Cooling for 10 hr in water

↓

Brining for 20 hr. in brinebath
(21°baumé)

↓

Storing for 13°C for 4 weeks
under vacuum in bags

↓

Storing for 4 weeks at 4°C

Figure 13

Figure 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2003003436 W

### Non-patent literature cited in the description

- **CERNING.** *FEMS Microbiol. Rev.,* 1990, vol. 87, 113-472
- **SUTHERLAND, I. W.** *Adv. Micro. Physiol.,* 1972, vol. 8, 143-212
- **MOREIRA et al.** *Milchwissenschaft,* 2003, vol. 58 (5/6), 301
- **BROADBENT et al.** *Int. Dairy J.,* 2001, vol. 11, 433-439
- **BROADBENT, J. R. et al.** *J. Dairy Sci.,* 2003, vol. 86, 407-423
- **PETERSEN, B. L. et al.** *J. Dairy Sci.,* 2000, vol. 83, 1952-1956
- **BHASKARACHARYA ; SHAH.** *The Australian J. of Dairy Technology,* 2000, vol. 55 (3), 132-138
- Encyclopaedia of Food Science and Food Technology. Academic Press, vol. 2, 802-856
- a non-digestible food ingredient that beneficially affects the host by selectively stimulating the growth and/or the activity of one or a limited number of bacteria in the colon. *Am Clin Nutrit,* 2001, vol. 73, 406S-409S
- **VAN LOO et al.** *Br. J. Nutr.,* 1999, vol. 81, 121-132
- **HUBER, P. ; FERTSCH, B. ; SCHREIBER, R. ; HINRICHS, J.** Dynamic model system to study the kinetics of thermally-induced syneresis of cheese curd grains. *Milk Science Interhational,* 2001, vol. 56 (10), 459-552